# EUROPEAN PATENT APPLICATION

(11) **EP 2 319 814 A1**
(43) Date of publication of application: **11.05.2011**
(21) Application number: 10010779.6
(22) Date of filing: 31.03.2004
(51) Int. Cl.: C03C 21/00

(54) **Method and apparatus for strengthening glass**

(30) Priority: 22.04.2003 US 464356 P; 31.03.2004 US 813435
(62) Divisional of application: 04759778.6
(71) Applicant: The Coca-Cola Company, Atlanta, Georgia 30313 (US)
(72) Inventor: Postupack, Dennis, Alpharetta GA 30022 (US); Lacourse, William, Alfred NY 14802 (US)
(74) Representative: Taylor, Adam David

(57) **Abstract**

An apparatus, comprising: a staging area; a glass article moving means for moving a glass article after forming of the glass article and prior to cooling the glass article to a temperature below the annealing point temperature of the glass article; a salt bath, the salt bath comprising molten salt, the glass article moving means being configured to move the glass article from the staging area and dip the glass article into the salt bath for 10 seconds or less, the glass article moving means being configured to dip glass articles having a surface temperatures of at least the annealing point temperature of the glass, the temperature of the salt bath being greater than the surface temperature of the article immediately preceding dipping; and a strengthening lehr, the strengthening lehr being configured to keep the glass article at a temperature between the strain point temperature of the glass and about 150°C below the strain point temperature for at least five minutes.

## Description

### CROSS-REFERENCE TO RELATED APPLICATIONS

This application claims priority to U.S. Provisional Application No. 60/464,356, filed and April 22, 2003 (our reference: 01638.0010.PZUS00), entitled "Methods and Apparatus for Strengthening Glass," and its corresponding non-provisional application (serial number to be assigned), filed March 31, 2004 (our reference: 01638.0010.NPUS02), entitled "Method and Apparatus for Strengthening Glass," the contents of which are hereby incorporated by reference in their entirety.

### FIELD OF THE INVENTION

This invention relates to methods and apparatus for strengthening glass. More specifically, the invention relates to chemical strengthening methods in which ions are applied to glass articles, and apparatus for using these methods in bottle making.

### BACKGROUND OF THE INVENTION

Glass bottle making has been automated for many years and many facilities exist for the production of glass bottles, especially for the soft drink and alcoholic beverage industries. Traditional automated glass bottle making begins in a glass-melting furnace. Raw materials including calcium carbonate, sand (silica), sodium carbonate, and waste glass, for example, are fed into the glass-melting furnace, where they are melted at a temperature of approximately 1500°C. The melting temperature depends on the ingredients used in the glass. A stream of molten glass continuously emerges from the furnace, and a feeder cuts the stream into gobs of a predetermined amount of glass.

Glass bottle forming methods often involve an initial formation step and a finishing step. The initial formation process drops individual gobs of glass into a blank mold, where they take an initial shape, becoming parisons. The initial step of the press-and-blow process uses a metal plunger to press a gob into a blank mold, and the initial step of the blow-and-blow process uses compressed air to press a gob into a blank mold. The parisons from the initial steps are then transferred to a finishing mold. The parisons may be reheated if necessary before compressed air is applied to expand the parisons to fill the finishing mold so that the glass takes the shape of the finishing mold, thus forming the final shape of the bottle.

Newly formed bottles are typically conveyed through an annealing lehr, in which they are reheated and gradually cooled through the annealing point of the glass. The annealing point of glass depends on the glass composition. For example, the annealing point may be defined as the temperature at which a glass will release 95% of its stresses within 15 minutes. This definition may vary, however, depending on the glass composition and the associated shear modulus associated with the glass composition. For any particular composition, the annealing point is the temperature at which the viscosity of the glass is 10¹³ poise. At the annealing point, strain in the glass is removed in 15 minutes. For purposes of illustration, the annealing point of flint glass is about 550°C. By holding the bottles at or above the annealing temperature for a time, the temperature near the surface of the glass becomes nearly the same as the temperature at the interior. This minimizes the temperature differential between the interior and the surfaces, and thus prevents the exterior surfaces from cooling at a faster rate than the interior. Annealing thus greatly reduces glass strain that would eventually otherwise result. In the absence of the annealing process, finished glass articles may spontaneously shatter under their own internal strains. Annealed glass is thus much stronger than glass that has been cooled quickly through its annealing temperature in an uncontrolled manner.

Glass breakage occurs as a result of tension, especially at surfaces, and glass fractures typically originate at surfaces. In order to strengthen glass articles, and to thus reduce the probability of breakage, an alternate approach to annealing is to uniformly increase the compressive stress at the surfaces of the glass articles. Chemical strengthening of glass is a process by which smaller ions on the surface of the glass are replaced by larger ions in order to increase the surface compressive stress of the glass and to thus increase its strength. Most typically with soda-lime silica glasses, sodium ions on the surface of glass are replaced by potassium ions, although sodium may replace lithium, and potassium may replace both sodium and lithium.

In one chemical strengthening method, a glass product is treated with exchanging ions by immersion in a bath of molten salt for a length of time. For example, Table 1 of U.S. Patent No. 3,773,489 shows several potassium salt baths for use in chemical glass strengthening, including KNO₃ and K₂Cr₂O₇/KCl baths, where the temperatures of the salt baths range from 525°C to 625°C, and the glass immersion times range from 8 hours to 7 days. However, such processes are impractical in a mass production manufacturing setting because they require batches of products to be submerged in the molten salt bath for extended periods, thus interrupting the smooth flow of a conveyor-type manufacturing line. U.S. Patent No. 3,751,238 discusses a two-step potassium salt bath immersion chemical strengthening method. In the first step, a glass article is immersed in a KCl/K₂SO₄ salt bath for 20 minutes at 750°C (well above the strain point of 581°C and annealing point of 631°C). In the second step, the glass article is immersed in a KNO₃ bath for 4 hours at 525°C (56°C below the strain point).

Other chemical strengthening methods involve cooling glass articles well below the strain point before the ion exchange material is applied, typically in the form of saturated salt solutions. The strain point of the glass is the glass temperature below which permanent strain cannot be introduced, which may be the temperature at which the viscosity is 10^{14.5} poise (10^{13.5} Pa-sec).For example, in the processes described in U.S. Patent No. 4,206,253, after glass products have been produced and cooled below about 60°C, aqueous solutions of KCl, KNO₃, and K₂SO₄ at about 75°C are applied to the surfaces of the products. The products are then subjected to heat treatment at a temperature just below the strain point (about 510°C).

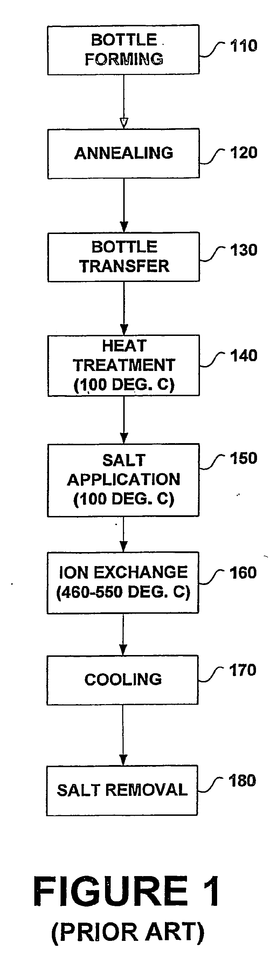

Figure 1 shows an example of a prior art chemical strengthening process using a potassium salt solution for strengthening glass articles. The bottle-forming 110 and annealing 120 steps are performed as described above. The glass is then transferred 130 to a secondary process in which the bottles are reheated 140 to a temperature of approximately 100°C. A salt solution is applied 150 to the bottles, which are then heated to the ion exchange temperature, i.e., 460-550°C, in a strengthening lehr. The ion exchange temperature depends upon how much time is available for the ion exchange reaction, which in turn depends on practical production considerations. The shorter the available time for ion exchange, the higher the ion exchange temperature should be. After the heat soak at the ion exchange temperature 160 the bottles are permitted to cool 170 to room temperature, at which time the residual coating, i.e., that portion of the salt that has not contributed to ion exchange within the surface of the glass, is removed, for example with a room temperature water spray. At this stage, the glass articles will preferably have cooled to about 90°C.

One purpose of the ion-exchange process is to increase the compressive stress at the surface of the glass by replacing smaller ions at the surface of the glass (e.g., sodium) with larger ions (e.g., potassium). If the glass were thereafter held at the annealing temperature for a time, the result would be that the compressive stress introduced at the surface by ion-exchange would be relieved. Thus the strengthening lehr may be within a temperature range of 460-550°C, depending upon the available ion exchange time based on practical production considerations. This temperature may, for example, be slightly below the annealing temperature, for example, 525°C. There is a balancing required in this ion-exchange step: hotter temperatures speed the ion-exchange process, but if the temperature is too hot and approaches the annealing temperature, the compressive stress introduced by the ion-exchange might be relieved through relaxation of the glass structure.

Referring back to Figure 1, a salt solution can be applied 150 to the bottles at a relatively cool temperature, well below the annealing and strain points. If the temperature of the bottles is too high during the application of a salt solution, then the application of the aqueous salt solution results in rapid quenching of the bottles, which often results in breakage. After application of the salt solution, the temperature of the bottles is raised in order to speed the ion exchange process. This prior art method suffers from lack of adaptability to existing in-line bottle manufacturing facilities because it requires that the bottles be cooled for a time in order to avoid fractures during application of the salt solution, and requires subsequent reheating for the ion-exchange reaction. These additional steps take time and reduce the efficiency of bottle making. These processes, however, are disadvantageous in that they are not easily adapted to pre-existing in-line bottle manufacturing lines because of the additional cooling and heating cycles that standard bottle manufacturing operations are not equipped to handle. Thus, changing the industrial process to include, for example, the aforementioned glass strengthening methods may be very costly.

U.S. Patent No. 4,218,230 purports to set forth a method to adapt the ion exchange method to high-speed commercial production lines. In this method, an aqueous solution of potassium phosphate and sodium phosphate is sprayed on glass articles at a temperature between 200°C and the annealing point of the glass. The glass is held at a temperature in the range of 300°C to just below the annealing point for 5 to 30 minutes.

A method in which powdered salts are applied to hot glass articles is described in U.S. Patent No. 3,791,809. In this method, a mixture of a low-melting point salt, KNO₃, and a high-melting point salt, K₃PO₄, are ground to a powder and applied to the surface of a glass article at a temperature above the annealing point. The low-melting point salts melt and fuse, adhering the mixture to the surface of the glass. Ion exchange occurs at a temperature of at least 200°C, but preferably above the strain point of the glass.

Another approach to preventing glass breakage is flame polishing, which removes surface defects such as small chips or scratches, by melting the defects and allowing the glass in the region of the defect to harden smoothly. For example, U.S. Patent No. 4,231,778 describes a method in which newly formed glass products are allowed to cool somewhat, then the surface is subjected to flame polishing following by a period of annealing. There are many patents describing apparatus for flame polishing glass, for example, U.S. Patents No. 4,265,651; 2,422,482; 2,338,841; and 2,331,014.

There is a need in the art for methods of glass manufacturing that produce high strength glass articles. There is a related need for improved methods of ion exchange strengthening. There is also a need for glass strengthening methods that can be adapted to existing bottle manufacturing facilities without requiring substantial refitting of those facilities.

### SUMMARY OF THE INVENTION

This invention provides methods for chemical strengthening of glass articles comprising applying a salt to glass articles at temperatures of at least the annealing point temperature of the glass and then maintaining the glass article at elevated temperatures in a lehr. The elevated temperatures may be, for example, between the strain point temperature of the glass and about 150°C below the strain point temperature. The glass may be maintained at such elevated temperature for at least about five minutes. Embodiments of the invention may include methods and apparatus for flame polishing in combination with chemical strengthening. Some embodiments of the apparatus of the invention are adaptations of existing bottle making facilities to perform embodiments of the methods of the invention.

In one aspect, the invention provides a method for strengthening a glass article. The glass article may be formed from molten glass using any glass forming process. The finished formed glass article may be flame polished to melt and thus heal any surface imperfections while increasing the temperature of the surface of the glass article to at least the annealing point temperature of the glass used to form the article. In one embodiment, the glass article is a glass bottle. In another embodiment, the glass article is formed from a glass with a strain point temperature of about 530°C and an annealing point temperature of about 550°C.

One embodiment of the method the salt is applied in a step of dipping a glass article into a molten salt bath for less than about one minute, for example, about 0.5 to about 30 seconds, or preferably about 3 to about 5 seconds. In a preferred embodiment, the molten salt bath comprises potassium nitrate and potassium chloride in an equimolar mixture. Some embodiments of the salt bath include potassium nitrate and potassium chloride in mole percent mixtures in the range of 40 to 60 percent, and other embodiments include mixtures of 40-60% potassium nitrate and 40-60% potassium chloride. Other embodiments include molten salt baths comprising potassium sulfate and potassium chloride. In still other embodiments, the molten salt bath comprises combinations of any two or more of: potassium nitrate, potassium sulfate, potassium chloride, potassium phosphate, and potassium dichromate. In one embodiment, the temperature of the salt bath is greater than the bottle temperature immediately preceding immersion. In another embodiment, the temperatures of the molten baths may be in excess of 25°C above the annealing point of the glass. In yet another embodiment, the salt bath can have a temperature range of between 550°C and 750°C.

In an alternative embodiment, salt is applied to the surface of a glass article by spraying the glass with a solution containing potassium ions or a powdered or molten potassium salt while the surface temperature of the glass is at least about 25°C above the annealing point of the glass. Alternatively, the spraying step may take place at a temperature of at least 50°C above the annealing point of the glass or at least 100°C above the annealing point of the glass. In one embodiment, the potassium solution or potassium salt is potassium phosphate (K₃PO₄). In another embodiment, the potassium solution comprises about 50% potassium phosphate by weight and 50 wt.% water.

The spraying step may be conventional spraying by forcing a solution through a nozzle, or it may be flame spraying, electrostatic, or powder spraying. If conventional spraying is used, droplets of a potassium solution or potassium salt contact the hot glass article, and may cool the surface of the hot glass article slightly. If flame spraying is used, a powdered potassium salt may be fed through a powder flame spray gun where the powder is liquefied within the spray, and molten potassium salt liquid droplets contact the hot glass article. Alternatively, a potassium solution may be applied between flame polishing nozzles. If electrostatic spray is used, droplets of the potassium solution are electrically charged and become electrostatically attracted to the glass article. Alternatively, powdered potassium salts may be used in a conventional or electrostatic spray. In yet other embodiments, potassium salts may be applied by chemical vapor deposition.

Following the step of applying salt to a glass article, whether by dipping, spraying, or other applying method, the processes of the invention include the step of heat-treating the glass article in a lehr or other heat treatment apparatus. This step allows a high rate of potassium ion diffusion into a surface of the glass article by maintaining the surface at a temperature between or including the strain point of the glass and 150°C below the strain point. The glass may be maintained at an elevated temperature for at least about five minutes, preferably less than one hour, more preferably between ten minutes and one hour or between fifteen and twenty minutes.

In another embodiment, the invention provides an apparatus for producing a strengthened glass article. This apparatus may include a means for producing a molded glass article. The molded glass article may be produced by any means known to those skilled in the art, including but not limited to press-and-blow and blow-and-blow processes. The apparatus may include a thermal insulating tunnel after the forming station to minimize heat loss. The apparatus may further include flame polishing nozzles for flame polishing the surface of the glass article to remove surface flaws and to heat the surface to a temperature of at least about 25°C above the annealing point of the glass. In one embodiment, the glass article is a glass bottle. In one embodiment, the glass article is formed from glass with a strain temperature between 520°C and 540°C and an annealing temperature between 540°C and 560°C. In another embodiment, the glass article is formed from a glass with a strain temperature of about 530°C and an annealing temperature of about 550°C.

In one embodiment, the apparatus may further include a salt bath for dipping the glass article prior to heat strengthening. In one embodiment, the molten salt bath is a potassium salt bath, for example, a KNO₃/KCl salt bath, a K₂SO₄/KCl salt bath, or a K₂SO₄/KCl/KNO₃ salt bath. In one embodiment, the salt bath is maintained at a temperature of at least about 25°C above the annealing point of the glass.

In another embodiment, the apparatus may further include spray nozzles for spraying the glass article with a solution containing potassium ions or another potassium source. In one embodiment, the spray nozzles spray the potassium source onto the surface of the glass article while the surface is maintained at a temperature of at least about 25°C above the annealing point of the glass. In another embodiment, the spray nozzles spray the potassium onto the surface of the glass article while the surface is maintained at a temperature of at least about 50°C above the annealing point of the glass. In yet another embodiment, the surface is sprayed while it is maintained at a temperature of at least about 100°C above the annealing point of the glass. The spray nozzles may be substituted by a flame spray nozzle spraying a powdered potassium salt. Alternatively, the spray nozzles may be substituted by an electrostatic spray nozzle spraying a potassium solution. Alternatively, the spray nozzles may be substituted by a conventional or electrostatic powder spray nozzle. In one embodiment, the potassium solution comprises 50% potassium phosphate by weight and 50% water by weight.

Whether the apparatus has salt bath dipping means, salt spraying means, or other means for applying salt, the apparatus may further include a strengthening lehr, wherein the strengthening lehr may be configured to keep the glass article at a temperature greater than about 80°C below the strain point, and the glass article is kept in the strengthening lehr for at least about 45 minutes. Alternatively, the strengthening lehr may be maintained at a temperature up to the strain point of the glass. The glass article may be kept in the strengthening lehr for a maximum time of 30 minutes. Alternatively, the glass article may be kept in the strengthening lehr for at least about 15 minutes for higher temperature strengthening. In yet another alternative, the glass article may be kept in the strengthening lehr for about 45 minutes for lower temperature strengthening. In another embodiment, the glass article is maintained at a temperature at or below the annealing point of the glass for at least about 5 minutes.

A preferred method of practicing the invention will vary by type of glass, due to differing annealing points and strain points, the weight of the glass, shape of the container, etc. For purposes of illustration, when a 200 ml Coca-Cola Company contour flint glass bottle having a weight of 165 grams is being strengthened, the container is subjected to about twenty minutes of ion exchange at about 520 degrees Celsius. Flint glass typically used in such bottles has an annealing temperature of 550 degrees Celsius and a strain temperature of 530 degrees Celsius.

### BRIEF DESCRIPTION OF THE DRAWINGS

Figure 1 illustrates a prior art method of glass strengthening;
Figure 2 is a flow diagram of a method according to one embodiment of the invention;
Figure 3 is a Weibull plot illustrating the benefits of flame polishing;
Figure 4 is a strength versus time plot for both a high temperature ion-exchange glass strengthening process and a low temperature ion-exchange glass strengthening process;
Figure 5 is a flow diagram of a method according to an alternative embodiment of the invention;
Figure 6 is a bar chart comparing the benefits of various glass strengthening methods according to an embodiment of the invention;
Figure 7 is a plan view of a glass strengthening system according to one embodiment of the invention;
Figure 8A is a diagram illustrating one example of an annealing lehr used to compare the methods of the present invention with those of the prior art;
Figure 8B is a diagram illustrating an exemplary strengthening lehr according to an embodiment of the invention;
Figure 9 is a perspective view of a mechanism for dipping bottles in a system for strengthening bottles according to one aspect of the invention;
Figure 10 is a perspective view of a mechanism for rinsing bottles in a system for strengthening bottles according to one aspect of the invention;
Figures 11-20 are Weibull plots illustrating the benefits of the exemplary methods of chemical glass strengthening according to embodiments of the invention as compared to prior art glass strengthening methods;
Figure 21 is a plot of change in glass strength against the weight of the salt that adheres to the bottle;
Figure 22 is a Weibull plot demonstrating superior strength characteristics of glass rods manufactured by the immersion method of the invention in KNO₃/KCl baths; and
Figure 23 is a Weibull plot demonstrating superior strength characteristics of glass rods manufactured by the immersion method of the invention in K₂SO₄/KCl and K₂SO_{4/}KCl/KNO₃ baths.

### DETAILED DESCRIPTION OF THE INVENTION

The methods and apparatus of the invention relate to glassmaking processes and devices. Specifically, the methods and apparatus are improvements to existing glass bottle making processes and devices that allow the production of glass bottles with the superior strength characteristics provided by chemical strengthening. Some embodiments do not require substantial changes to existing bottle making facilities. The benefits of using the methods and apparatus of the invention include higher strength bottles per unit weight of glass than prior art methods. Alternatively, less glass may be used to make bottles of the same strength using the methods of the invention rather than using prior art methods. While the examples and description provided herein are directed to the manufacture of glass bottles, it should be understood that the invention may be applicable to any sort of glass articles, including but not limited to: glass jars, drinking or wine glasses or any glassware, glass jugs, and glass dinnerware, prescription lenses, imaging lenses, optical fibers, and automobile and building windows, for example.

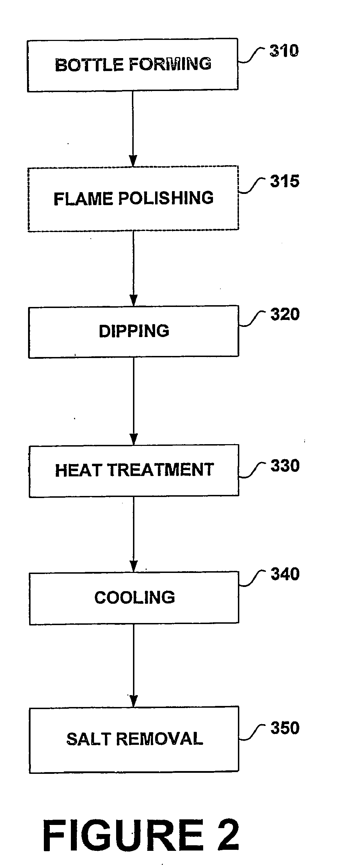

Figure 2 is a flow chart of a method of strengthening glass according to one embodiment of the invention. The bottle forming steps 310 may be performed as described above in the background section. However, it has been found that the blow-and-blow bottle formation process may form superior bottles than the press-and-blow process because of defects on the inside of the bottles caused by contact between the plunger and the interior surface of the bottles may occur when using the press-and-blow method. These defects may become the weak points in bottles strengthened by the methods of the invention, and thus the blow-and-blow process may be preferable for bottle formation. However, the strengthening methods of the invention can be beneficially used on bottles formed with the press-and-blow and the blow-and-blow processes.

Immediately after a bottle has been formed, its temperature is typically above the annealing point. In some embodiments, the bottles may then be dipped in a molten salt bath 320 after they have been formed. In some embodiments, the bottles may be flame polished prior to being dipped in the salt bath. As described in further detail below, as a bottle is passed through the flame polishing section of a glass strengthening system according to an embodiment of the invention, the flames can be moved via a mechanical means perpendicular to the direction of movement of the bottle. In some embodiments, a two-step flame polishing method may be used. The first step is performed, for example, while the glass articles are on the conveyor. This step may include flame polishing of the sides and the flutes at the top of, for example, a glass bottle. The second step may include flame polishing the bottoms of the glass articles. This may be done by lifting the glass articles off of the conveyor and running them over a flame. Flame polishing including this second step may eliminate defects in, for example, knurls (i.e., the ridges on the bottom of a glass bottle).

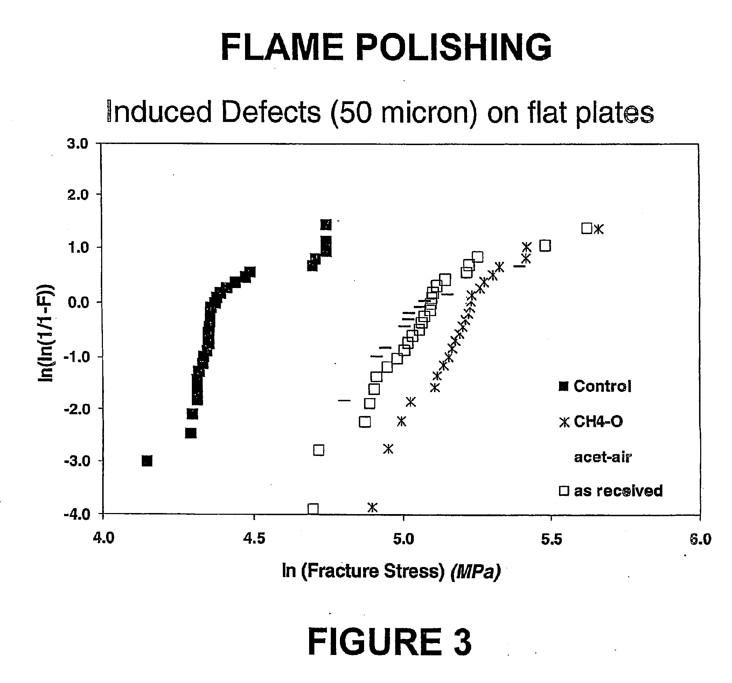

Figure 3 illustrates the benefits that may be achieved using a flame polishing step according to an embodiment of the invention. This plot was created using flat glass plates that were damaged with a diamond stylus to induce 50-micron defects. One set of plates were subjected to flame polishing using a methane/oxygen flame. A second set of plates were subjected to flame polishing using an acetylene/air flame. A third set of plates, the control plates, were not flame polished. A fourth set of plates were neither etched to induce defects nor flame polished. The glass plates were then subjected to stress until they fractured, and the fracture stress was recorded for each of the glass plates.

Figure 3 is a Weibull plot showing the results of these tests. The abscissa of the plot is a measure of applied stress and the ordinate is a measure of the probability of fracture. The flame polished plates withstood approximately as much stress as the plates with no induced defects, and were superior in strength to the control plates. Plates polished with the methane/oxygen flame were slightly superior in strength to those polished with acetylene/air and the plates with no induced defects. The plates polished with acetylene/air were slightly inferior in strength to the plates with no induced defects.

In some embodiments of the invention, the temperature of the bottles immediately before being dipped in a salt bath may be between, for example, 500 °C and 600 °C. In an alternative embodiment of the invention, the temperature of the bottles may be above the annealing point of the glass. In yet another embodiment of the invention, the bottles may be at least about 25°C above the annealing point of the glass. In another embodiment, the temperature of the bottles may be between 510 °C and 590 °C. In yet another embodiment, the temperature of the bottles may be between, for example, 510 °C and 550 °C. In one exemplary embodiment, the temperature of the bottles immediately before dipping in the salt bath may be about 540°C. The dipping time can be much shorter than prior art dipping times. The salt bath temperature may be higher than the bottle temperature. In one embodiment, the salt bath temperature may be between, for example, 550°C and 750°C. In one exemplary embodiment, the salt bath may be at a temperature of approximately 610 °C. In another embodiment, the salt bath temperature may be at about 600°C. As discussed above, the prior art typically requires immersion for between ½ hour to 4 hours. In step 320, however, the bottles may be immersed for less than one minute Preferably, the bottles may be dipped in the salt bath for between 0.5 seconds and 30 seconds. In another embodiment, the bottles may be dipped in the salt bath for between about 3 seconds and 5 seconds. In another preferred embodiment, the bottles may be dipped for less than 10 seconds.

In one embodiment, the molten salt bath can be a potassium salt bath with a melting point above the temperature of the strengthening lehr used during the heat treatment step 330. A preferred composition for the molten salt bath is 45 mol% potassium nitrate (KNO₃) and 55 mol% potassium chloride (KCl). This composition may be at liquid at a temperature of between 550°C to 750°C, thus allowing uniform coating of the bottles dipped into the bath maintained in this temperature range. This composition is semi-solid at a temperature of about 520°C, thus allowing the salt to remain in place as a roughly uniform coating on the bottle during the heat treatment step 330, which allows roughly uniform strengthening and prevents salt buildup within the strengthening lehr. Other suitable salt bath compositions can be determined by those of ordinary skill in the art using phase diagrams and routine experimentation. For example, other suitable salt bath compositions may include KCl/KNO₃/K₂SO₄. In general, the salt bath composition is preferably such that the bath is liquid at a temperature of about 50°C above the annealing point of the glass, and solid or semi-solid at the temperature of the strengthening lehr.

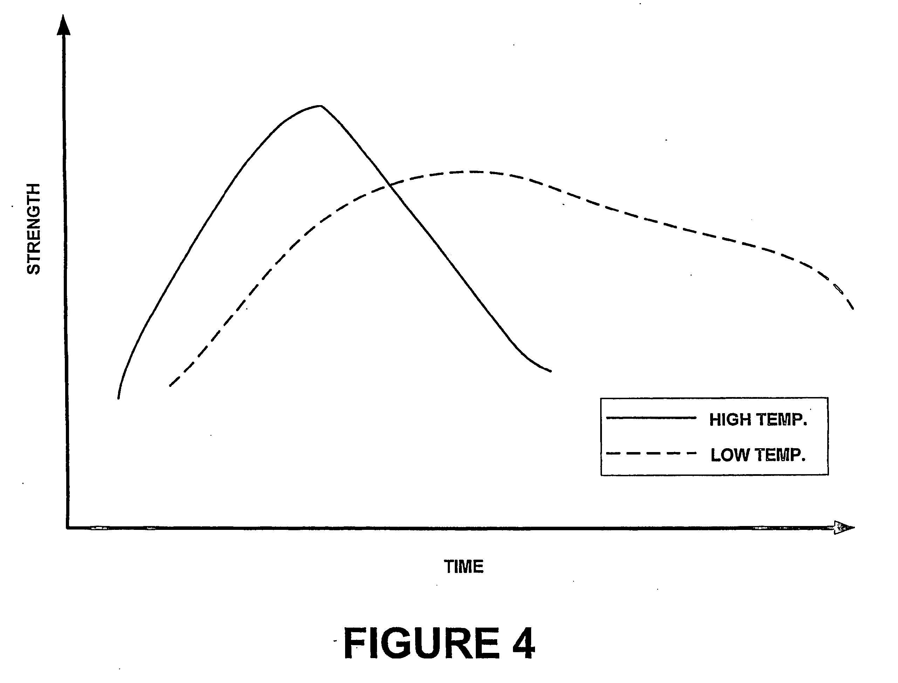

As illustrated in Figure 4, the strength of the glass following a strengthening treatment is dependent on temperature and the time that the glass is treated. Therefore, there are trade-offs when performing any glass strengthening methods. For example, when strengthening glass at a lower temperature, the glass may not become as strong as it otherwise would if the glass was treated at a high temperature such as, for example, the annealing temperature of the glass. When treating glass at a higher temperature, however, the maximum glass strength varies more dramatically with time, and therefore, tolerances may need to be adjusted accordingly.

Thus it is contemplated that the ion-exchange reaction can occur at or below the annealing point provided that the temperature is maintained for a time shorter than or equal to about 15 to 20 minutes. However, because both the ion-exchange reaction and the relaxation that occurs at or above the annealing point are dynamic processes, significant deviation from this general rule can be achieved. Thus the invention should not be considered limited by any particular temperature for any particular time.

The time and temperature of the heat-treatment step may be adjusted depending on the requirements of the production facility, with greater temperatures and shorter times used when needed for more rapid production, and longer heat-treatment times used to further increase the strength of the treated glass. In another embodiment, the glass article is maintained at the strain point temperature for times in the range of 5 to 30 minutes. Increasing the exposure time at these temperatures may result in decreasing strengths of the glass article. As the exposure time increases at any temperature, the strength of the glass article may gradually increase to a maximum value, and then may decrease. This maximum strength time decreases with temperature increases.

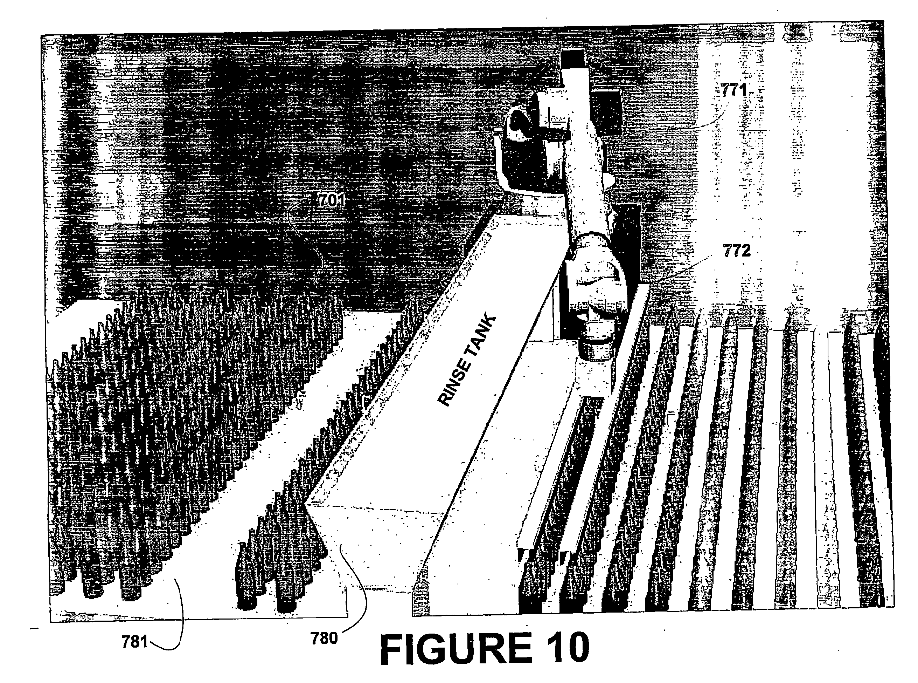

The bottles may then be subjected to heat treatment 330 in a strengthening lehr. This heat treatment may accelerate the ion-exchange process. The temperature of the strengthening lehr is preferably less than or approximately equal to 150°C less than the strain point of the glass. More preferably, the temperature of the strengthening lehr may be set between about 130°C below the strain point of the glass and the strain point of the glass. In one embodiment, the temperature of the strengthening lehr is approximately more than 30 °C below the strain point temperature of the glass. Alternatively, the temperature of the strengthening lehr is approximately more than 10°C less than the strain point temperature of the glass. In one embodiment, the glass can remain in the lehr for a time between 15 minutes and 55 minutes. More preferably, the glass can remain in the lehr for a time between 20 and 50 minutes. In some embodiments, depending on the type of glass used, the glass may remain in the strengthening lehr for a duration of about 30 minutes. Larger bottles may need to be processed at slower speeds, and therefore, they may be in the lehr for longer time periods. Since they may be exposed for a longer time period, the temperature may need to be reduced to optimize the strengthening process. However, the duration of the ion-exchange reaction can be more or less than that depending on the temperature selected, as described above with reference to Figure 3. After the heat treatment 330, the bottles may be cooled 340 and the salt removed 350 in the same manner as described above. As will be described in additional detail below with reference to Figure 10, the glass may be cooled slowly in the lehr.

In a one exemplary method according to and embodiment of the invention, formed glass articles emerge from the glass forming process at a temperature of approximately 650°C. The temperature may be greater or lesser depending on the particular processes and materials used, bottle design and wall thickness. In one embodiment, a minimal amount of a hot-end tin oxide coating may be applied to the glass article at a coating thickness of anywhere between, for example, 20 and 45 ctu (coating thickness units). Application of the tin oxide coating may form a texture on the surface of the glass to allow for the cold-end coating, applied later, to adhere to the surface of the glass bottle. The coating thickness unit associated with one ctu for tin oxide is about 4 angstroms. This coating may be applied using any method known in the glass-making arts, typically at a location between bottle formation and the lehr entrance. Alternatively, the tin oxide coating may be applied prior to flame polishing of the bottles, if flame polishing is used.

After depositing the tin oxide coating, the tin oxide-coated glass article may, in some embodiments, be flame polished to melt and heal any surface imperfections in the glass. Alternatively, any acceptable flame polishing rate may be used. Flame polishing may also increase the temperature of the glass article to about 25°C above the annealing point of the glass, or even more in some situations. In another embodiment of the invention, the bottles are not coated with the tin oxide. In some embodiments, after flame polishing and deposition of the tin oxide coating, the bottle temperature may be in excess of 550°C.

Chemical strengthening can occur either directly after applying the tin oxide coating or, alternatively, after flame polishing. To perform chemical strengthening, the article may be dipped into a salt bath. In one embodiment, the bottles are dipped into, for example, a 50% KNO₃/50%KCl salt bath that is at a temperature of 610°C for about 1 second. Following the brief dip in the salt bath, the bottles may be transferred to a strengthening lehr that is at a temperature of, for example, between 480°C and 530°C. In another embodiment, the bottles can be placed in a strengthening lehr, the lehr temperature being between, for example, 490 °C and 520 °C. In alternative embodiments, the strengthening lehr may have a set-point temperature between about 150°C less than the strain point of the glass and about the strain point of the glass. The temperature of the strengthened article may be reduced in a cooling section of the lehr for approximately 25 minutes to 90°C. After cooling, the glass article is subsequently dipped in a water bath at 90°C for a predetermined duration to remove the excess salt. In one embodiment, the predetermined time can be, for example, 6 seconds to remove the excess salt. Excess water may then removed using, for example, an air curtain.

A cold-end coating such as, for example, a stearate or polyethylene coating may be applied to the warm article. Other cold-end coatings may include adding a low-temperature cold-end coating such as silicone wax, polyethylene, polyvinyl alcohol, stearic acid, or oleic acid, or any other cold-end coating known to those in the bottle making art to provide lubricity and prevent scuffing of the bottle through the inspection and filling lines. The coated article may then be transferred to a decorating line to apply a low temperature organic decorative coating. In an embodiment using a polyethylene coating, the coating may not need to be cured. In one embodiment, a protective scuff-resistant coating may be applied to the surface of the glass article. In an alternative embodiment, a post-end coating may be applied after a caustic washing process prior to filling the process of the bottle. This post-end coating may be, for example, a polyethylene coating. In the case of refillable bottles, these coatings may be applied after each caustic wash cycle. One example of an acceptable bottle coating that may be utilized as a post-end coating is the Tegoglas 3000+ Anti-Scuff Coating offered for sale by Atofina.

It should be noted that the greater strength of the glass in bottles manufactured using the techniques described herein may allow less glass to be used while preserving equivalent bottle strength. For example, using a computer model, bottles weighing 170 grams manufactured using prior art methods can be reduced to 110 grams while preserving the strength of the bottles. It should also be noted that the superior strengthening methods of the present invention may be enhanced and bottle weight further reduced by designing bottles that exploit the high strength characteristics of the outer surfaces of bottles prepared by these methods. Bottles can be designed to take advantage of these characteristics using computer modeling, for example, finite element analysis methods known to those skilled in the art.

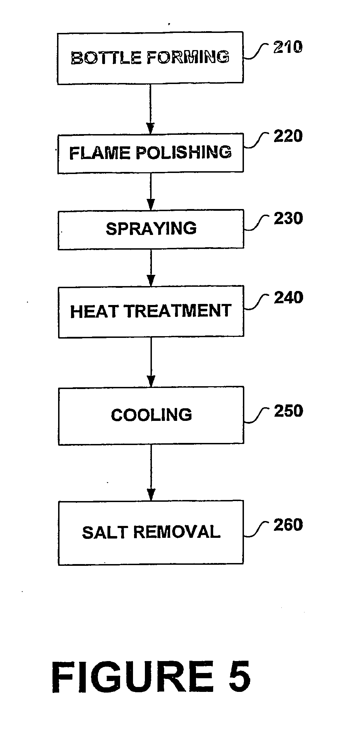

Figure 5 is a flow chart of a method according to an alternative embodiment of the invention. The bottle forming steps 210 may be performed as described above in the background section. Immediately after a bottle has been formed, its temperature is typically above the annealing point. For example, in one embodiment, the bottle may have a temperature of approximately 600°C. The bottle formation process frequently results in glass defects, generally by thermal shock by contact with a colder material such as a mold or a dead plate. These defects can be stress concentrators and are often the cause of low strength in glass bottles.

The bottle may then be flame polished 220 in a similar manner to that described above with respect to the salt bath dipping methods. The flame polishing can be performed by any method known in the art. For example, the flame polishing may be performed by passing the bottle past a series of nozzles emitting a combustible gas, for example, air-methane, oxy-methane, air-acetylene, or oxy-acetylene. Other components such as moisture may be added to the flame stream to accelerate the flaw blunting process. Flame polishing is useful for accomplishing either or both of two objectives: (1) healing surface flaws in the glass surface, and (2) raising the surface temperature of the glass to a temperature may be raised well beyond the annealing point, thus minimizing any breakage during the subsequent spraying process described below.

Flame polishing 220 may be accomplished by applying the flame to the bottle for 0.1-10 seconds, preferably from 0.1-5 seconds. Most preferably, the flame is placed in contact with the surface of the bottle for a time sufficient to cause any sharp cracks to melt and become rounded. The flame polishing step 220 may increase the surface temperature of the bottle well above the annealing point of the glass. In one embodiment, the bottles may be heated, for example, to a temperature above 650°C. Alternatively, flame polishing 220 may increase the surface temperature of the bottles to between 550°C and 650°C. The benefits of flame polishing have been described with reference to Figure 3, above.

In alternative embodiments for dipping, spraying, or other salt application methods, instead of, or in addition to, flame polishing, one method of the invention may use microwave surface heating to heal flaws in the glass, to introduce controlled surface residual stress, to speed up ion-exchange strengthening after a salt has been sprayed on, to strengthen by dealkalization via a sprayed-on ammonium-sulfate compound, and/or to raise the surface temperature to accelerate a subsequent ion-exchange strengthening process. Glass surface heating by microwave irradiation may be facilitated by application of a microwave sensitive coating to the surface of the glass article. Particularly useful in ion-exchange reactions is a microwave sensitive coating that also contains exchangeable potassium ions.

In one embodiment of the invention, the bottles may then be sprayed 230 with a salt solution while the surface temperature of the bottle is greater than the annealing temperature. In one example, the bottles may have a surface temperature of between about 550°C and 650°C when the annealing temperature is about 550°C. Preferably, the surface temperature of the glass is hot enough that spraying the salt solution does not cool the glass below the strain point (the strain point may be, for example, 530°C). Preferably, the solvent evaporates prior to or immediately on contact with the surface of the bottle. A preferred temperature range is greater than about 50°C above the annealing point of the glass. An alternative temperature range is greater than about 50°C above the strain point of the glass. In yet another alternative embodiment, the surface temperature of the glass is any temperature at which the spraying step does not result in inducting defects in the glass article.

The salt solution may be any solution known to those skilled in the art to be useful in ion-exchange glass strengthening. A preferred salt solution is a 50 wt.% aqueous solution of potassium phosphate (K₃PO₄, anhydrous). This solution is preferred because a 50 wt.% potassium phosphate solution is achievable at room temperature, thus it would be unnecessary to heat the solution. However, a 62 wt.% potassium phosphate solution may be achieved at about 50°C, and such a solution may also be used in the invention. Alternatively, the salt solution may be 45 wt.% potassium phosphate, 10 wt.% sodium phosphate (Na₃PO₄), and the remainder may be water. In another embodiment, the salt solution comprises a mixture of potassium sulfate (K₂SO₄), potassium chloride (KCl), and potassium nitrate (KNO₃).

In an alternative embodiment, the bottles may be flame sprayed rather than sprayed in a conventional manner. In the flame spray embodiment, a powdered salt, for example, potassium phosphate salt, may be sprayed upon the surface of the bottles. By using a flame spraying embodiment according to an embodiment of the invention, it is contemplated that spraying kinetics may be increased and breakage reduced with the flame spray method because this method does not require the heat of the bottle to evaporate the water in the atomized droplet. Powdered salt may be melted in a flame to form a fine molten atomized spray. In an alternative embodiment, rather than powdered salt, the flame spray may use a salt solution. The flame can be any flame known to those in the art, for example, methane, oxy-methane, acetylene, oxy-acetylene or hydrogen. Examples of flame spray devices that may be useful for use in the present invention include devices disclosed in and devices referred to in U.S. Patent Nos. 4,674,683 and 5,297,733, or any other flame spray device known to those of skill in the art.

In yet another alternative embodiment, the bottles may be electrostatically sprayed. In this embodiment, an electric potential is applied to the sprayer, for example, a negative potential, and the bottle is grounded. Droplets of salt solution or molten salt become negatively charged and are attracted to the neutral bottle, thus providing an even coating to the bottle. Examples of electrostatic spray devices that may be useful for use in the present invention include devices disclosed in and devices referred to in U.S. Patent Nos. 5,759,271 and 5,704,554, or any other electrostatic spray device known to those of skill in the art.

As in dipping methods previously described, the flame polished, sprayed bottles may then be subjected to heat treatment 240 in a strengthening lehr or any other suitable environment such as an oven. Preferably, the heat treatment is at a temperature less than the strain point of the glass. For example, if the strain point is 530°C, heat treatment in the strengthening lehr may be at a set point temperature of 510°C for 20 to 25 minutes. As another example, heat treatment in the strengthening lehr may be 520°C for 15 minutes. However, other embodiments include heat treatment at a temperature greater than 80°C below the strain point of the glass or heat treatment at a temperature greater than the strain point of the glass. In a preferred embodiment, the strengthening lehr may have a temperature between about 150°C below the strain point, more preferably between about 130°C below the strain point temperature and about the strain point temperature of the glass. In each of these embodiments, as discussed with reference to Figure 4, there is a balancing that must be achieved between speeding up the ion-exchange reaction, which happens at higher temperatures, and preventing relaxation of the glass surface, which is best achieved at lower temperatures. For example, at the annealing point, relaxation of the glass surface occurs in approximately 15 minutes.

In a preferred embodiment, the temperature of the heat treatment is less than the melting point of the salt that was sprayed onto the surface of the bottles in order to prevent the salt from dripping down the side of the bottle. This prevents an uneven distribution of the salt on the bottle surface, and thus prevents uneven strengthening, and it also prevents pooling of the salts inside the lehr. The aqueous spray application of the salt forms a tenacious coating on the glass bottle not easily removed by abrasive contact. After the bottles have been subjected to heat treatment 240, they are cooled 250 and washed with water 260 to remove the remaining salt residue. Other additional processing may be the application of decorative coatings and the application of second protective coatings, as described above.

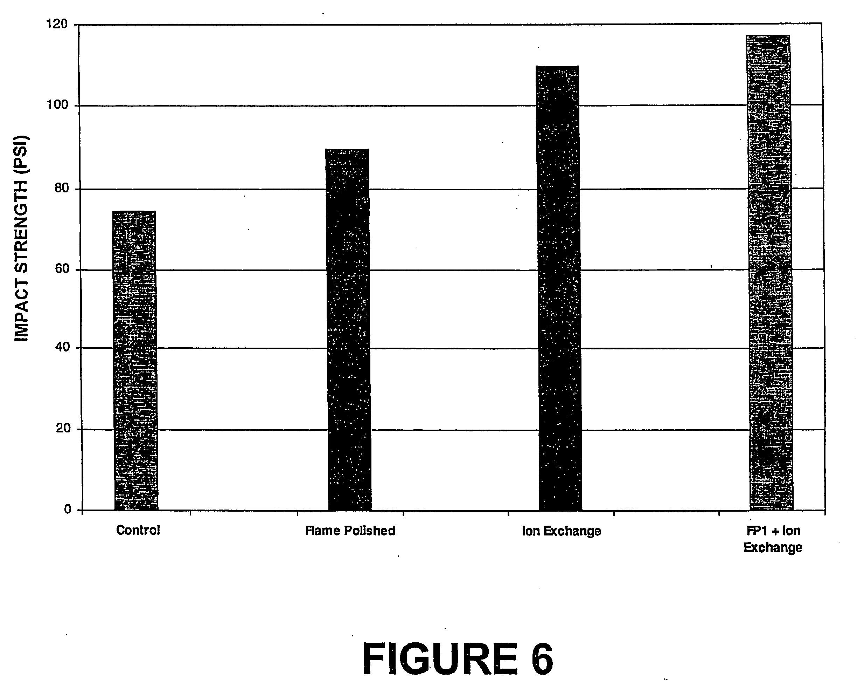

Figure 6 is a bar chart comparing the benefits of various glass strengthening methods according to an embodiment of the invention. As is apparent from the chart in Figure 6, the use of an ion-exchanged method including flame polishing can produce glass having a greater strength than ion-exchanged methods and flame polishing methods alone. The experiments conducted to achieve this chart are described in further detail below in Example 12.

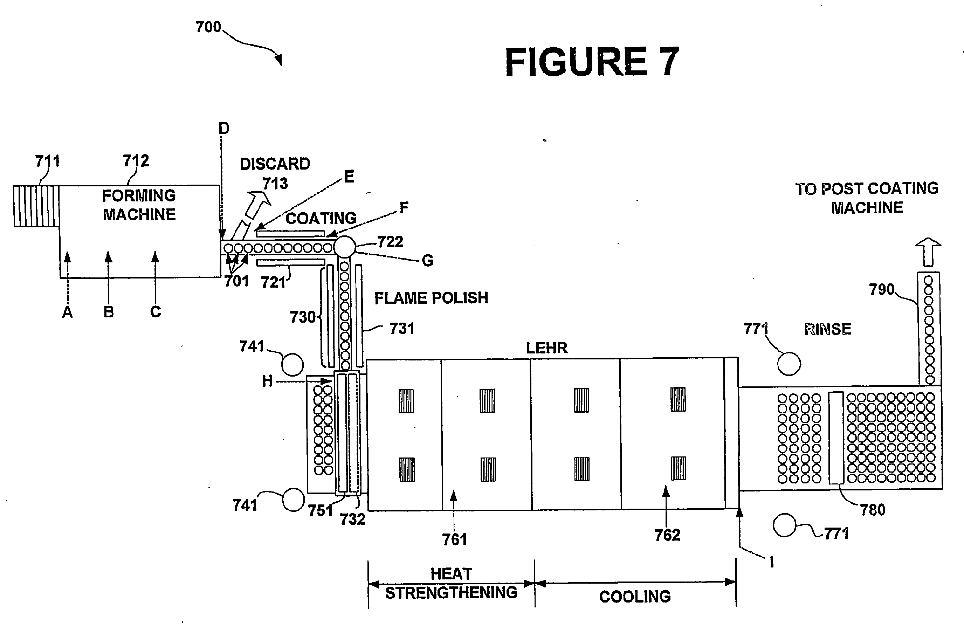

Figure 7 is a plan view of a glass strengthening system 700 according to one embodiment of the invention. The glass forming machine 712 receives raw materials for making a particular type of glass via input 711. The glass forming machine 712 may be configured to process drops or individual gobs of glass into formed glass articles as described in the background. Formed glass articles emerge from the forming machine in the shapes of, for example, bottles 701. Other glass articles, such as, for example, jugs, jars, and vases, to name a few examples, can be formed in the same manner.

After the bottles 701 are output from the forming machine 712, they may be monitored, and defective bottles may be discarded via output 713. After an initial inspection, the bottles can be coated with a coating at 721. The application of the coating at 721, can include, for example, the application of a tin oxide coating. The tin oxide coating may be applied to a thickness of, for example, between about 20 and 45 ctu. In some embodiments, coating of the bottles 701 is optional. In yet another embodiment, the bottles 701 can be flame polished prior to applying the tin oxide coating at 721.

After the coating of the bottles 721 is complete, the bottles may be passed through center transfer wheel 722 onto the cross conveyor 730. On the cross conveyor 730, bottles 701 may be flame polished using flame polishing means 731. The flame polishing means 731 can be any type of flame polishing apparatus that can be configured to be used on an industrial manufacturing line. Flame polishing of the bottles is optional, but in some embodiments it may be preferred because of the potentially beneficial effects that flame polishing has on the strength of the final glass product. It has been found that flame polishing is especially beneficial for bottles with large defects, which tend to weaken the glass article. Flame polishing can substantially diminish the breakage rate because flame polishing eliminates these large defects, thus strengthening the bottles that are most likely to break due to imperfections, as described above. In some embodiments, the bottles do not need to have the sides flame polished. For example, beer bottles may not need to have their sides flame polished in all embodiments of the invention. Therefore, a decision of whether to flame polish a bottle may depend on the type of bottle being polished.

After the bottles have been flame polished using flame polishing apparatus 731, the bottles may be arranged at the front of the lehr so that a glass article moving means 741, such as, for example, a robotic machine arm, illustrated by circles 741 may pick the glass bottles up from a staging area in front of the lehr, and dip them into salt bath 751. Alternatively, salt bath 751 may be replaced by a mechanism for spraying the bottles with a salt solution, or alternatively a means for flame-spraying the bottle. In an alternative embodiment, prior to being dipped in the salt solution, the glass bottles 701 can be moved over optional flame polishing means 732, so that the bottom of the bottles 701 can be flame polished. The bottles may be flame polished at any acceptable flame polishing rate.

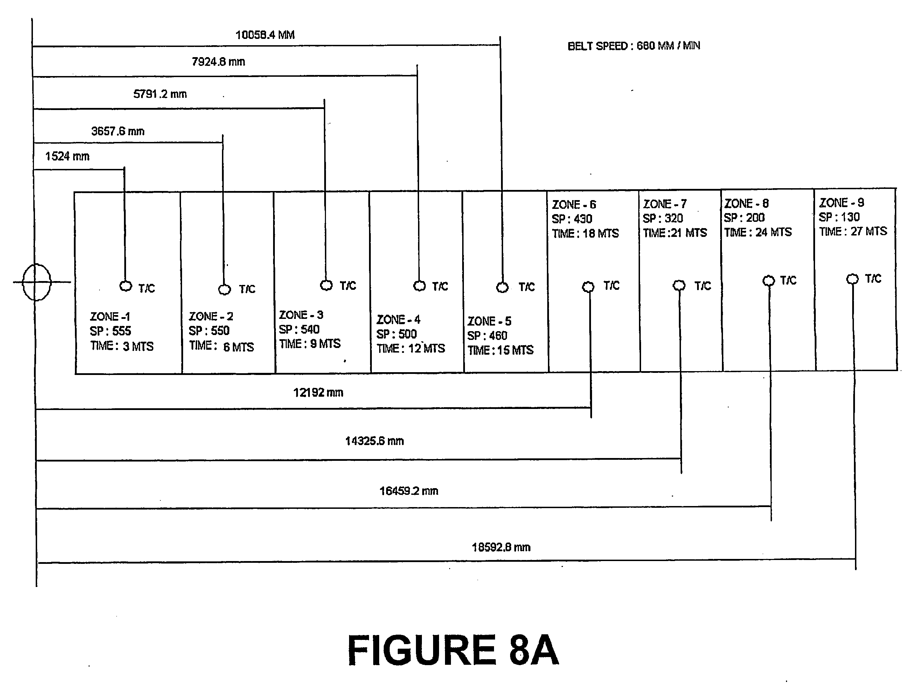

After the bottles have been flame polished using optional flame polishing means 732, and dipped in the salt bath 751, the bottles may be placed into the strengthening lehr 760. In one embodiment of the invention, strengthening lehr can have a strengthening section 761 and a cooling section 762. Alternatively, there may be more than one strengthening section 761, and more than one cooling section 762. An exemplary annealing lehr configuration is illustrated in Figure 8A. In this embodiment, there are six annealing sections and three cooling sections. The annealing lehr in Figure 8A was used to perform comparison testing as described with respect to Example 11, discussed below. the traditional annealing lehr illustrated in Figure 8A may include a first zone having a set point temperature of 555°C. A glass article may remain in each zone for, for example, three minutes. A second zone can have a set point temperature of 550°C. A third zone can have a set point temperature of, for example, 540°C. A fourth zone can have a set point temperature of about 500°C. A fifth zone can have a set point temperature of 460°C. A sixth zone can have a set point temperature of 430°C. The seventh, eighth, and ninth zones can have set point temperatures of 320°C, 200°C, and 130°C, respectively. Any known annealing temperature profile may be used in comparing the effects of maintaining the set point temperatures of the lehr below the temperature of the glass articles, and preferably between about 150°C below the strain point temperature of the glass and about the strain point temperature of the glass. More preferably, the temperature may be between about 130°C less than the strain point temperature of the glass and about the strain point temperature of the glass.

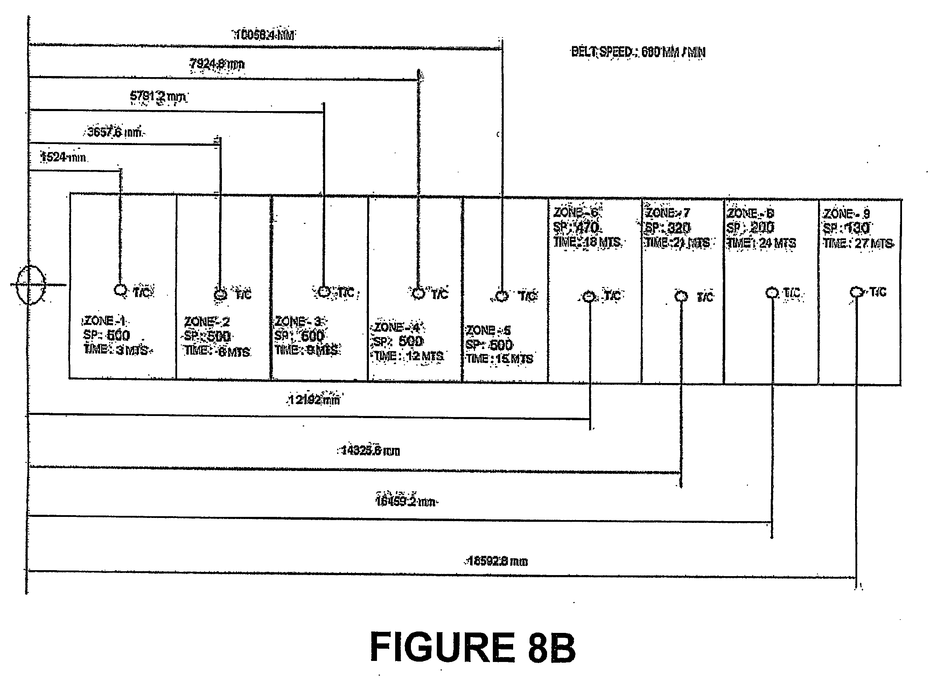

An example of a strengthening lehr is illustrated in Figure 8B. In this embodiment, there are five strengthening sections and four cooling sections. A strengthening lehr may include a first, second, third, fourth and fifth zone each having a set point temperature of about 500°C. A sixth zone may have a set point temperature of, for example, 470°C. The seventh, eighth, and ninth zones can have set point temperatures of, for example, about 320°C, 200°C, and 130°C, respectively. Other strengthening temperature profiles may be used in connection with the methods of the present invention.

A number of trials were performed using a simulated factory environment. In order to simulate the production line, after being formed in the forming machine 712, the bottles were preheated. In one example, a 200 mL bottle was flame treated at 4" per second, preheated at 500°C for five minutes, dipped in a salt bath at 615°C, and strengthened in a lehr 760 for 20 minutes at 500°C. The average temperature of this bottle prior to this treatment was 501°C and after this treatment was 451°C. In another example, a 200 mL bottle was flame polished at 4" per second, and was preheated for five minutes at 590°C. The surface temperature of the bottle prior to the treatments was 501°C, and following the treatment was 525°C. In another example, a 200mL bottle was flame polished at 4" per second, preheated at a temperature of 500°C for five minutes and was dipped in a salt bath, the salt bath being at a temperature of 615°C. The temperature of the bottle prior to this treatment was 496°C, and the temperature following this treatment was 489°C. In yet another example, a 200 mL bottle was flame polished at 4" per second, and was preheated at a temperature of 500°C. The bottle temperature before the treatment was 494°C and following the treatment, the bottle temperature was 463°C. In yet another example, a 200 mL bottle was only flame polished at 4" per second. The bottle temperature prior to flame polishing was 500°C and the temperature following the flame polishing was 471°C. In another example, a 200 mL bottle was flame polished at a rate of 4" per second, was preheated at a temperature of 500°C and was strengthened in a lehr 760 for 20 minutes at 500°C. The bottle temperature prior to this treatment was 492°C and following the treatment was 452°C. All of the temperatures referred to above are average bottle temperatures based on measurements taken from at least three locations on the bottle.

An optional three-step salt removal process (where each of the steps may be used alone or in combination with any of the other steps) may begin with a first spray rinse step after the bottles leave the lehr 760. After bottles 701 have been sprayed, they can be moved by machine arms 761 and immersed in a warm water bath to loosen any remaining salt on the bottles 701. In one embodiment, after being immersed, bottles 701 may be spray rinsed again to remove any remaining salt. After any optional rinsing steps have been performed, the bottles may be dried with, for example, a jet of air. After being dried, the bottles 701 can be output via conveyor 790 to a post-coating machine (not illustrated).

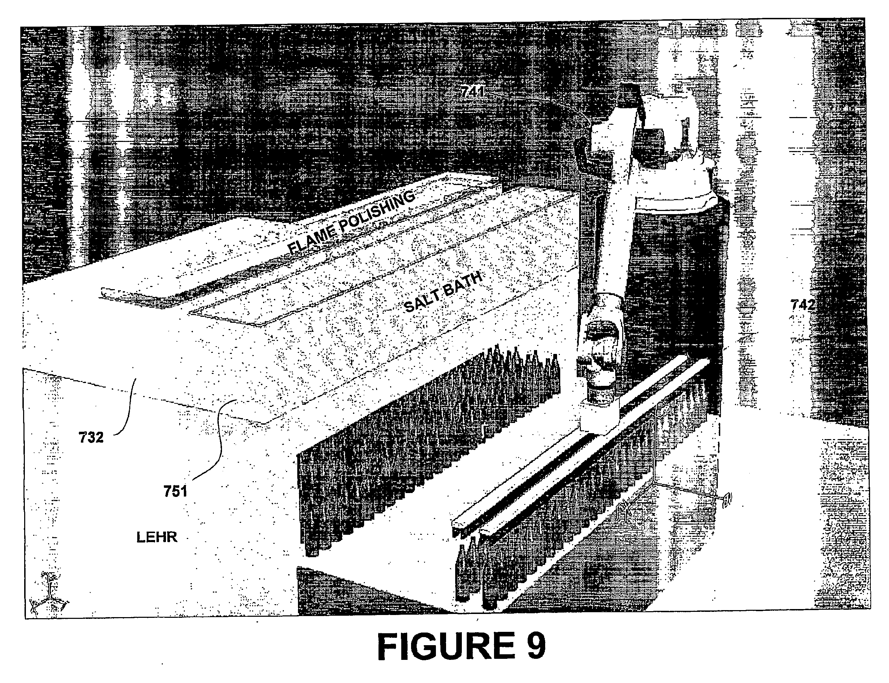

Figure 9 is a perspective view of a mechanism for dipping bottles in a system for strengthening bottles according to one aspect of the invention. Mechanical arm 741 may be configured to move, for example, two rows of bottles 701 using grasping elements 742. Mechanical arm can then dip the two rows of bottles 701 into the salt bath 751. Bottles 701 may be dipped in a salt bath for a duration between, for example, one minute or less. Alternatively, the bottles may be dipped for a time between about 0.5 seconds and about 30 seconds. Preferably, the bottles may be dipped for a time between about 3 seconds and 5 seconds. In yet another preferred embodiment, the bottles may be dipped for a time less than about 10 seconds. After a predetermined time has passed, mechanical arm 741 may remove the bottles 701 from the salt bath 751. In one embodiment of the invention, the bottoms of bottles 701 may be flame polished. In an alternative embodiment, the bottoms of bottles 701 are not flame polished.

Figure 10 is a perspective view of a mechanism for rinsing bottles 770 in a system for strengthening bottles according to one aspect of the invention. The system for rinsing bottles 770 can include a mechanical arm 771, having a grasping member 772. In one embodiment of the invention, the grasping member 772 can be configured to grasp two rows of bottles 701 and rinse them in a bath of warm water. In one embodiment, water in the rinse tank 780 can be at a temperature of, for example, 90 °C. Water in the rinse tank 780 may be any temperature close to the temperature of the bottles when they leave the lehr 760, as described above. After rinsing the bottles in the rinse tank 780 for a predetermined time period, the mechanical arm 771 may place the rinsed bottles 701 on a conveyor 781 for further handling.

In one experiment using all of the aforementioned strengthening processes, except for the chemical ion exchange process, the average temperature of five bottles was taken at various points in the system. Temperatures of the glass bottles were taken at the following stages of the process: the glass gob ("A"), glass blank ("B"), take outs ("C"), machine end ("D"), prior to the hot-end coater ("E"), after the hot-end coater ("F"), at the center transfer wheel ("G"), at the lehr entrance ("H"), and at the end of the lehr ("I"). As mentioned above, these temperature measurements were taken without the flame polishing on the conveyor between the forming machine 712 and the transfer wheel 722, or the transfer wheel 722 and the lehr entrance ("H") or a chemical ion exchange process or the flame polishing being used at the lehr entrance ("I").

The results represent an average of five bottles having the capacities of 200 mL bottle, a 300 mL bottle, a 330 mL bottle, a 350 mL bottle, and a 1 L bottle. The results for these different bottle capacities at each of the different locations are illustrated in Table 1.

**TABLE 1**

| Location | 200 mL (°C) | 300 mL (°C) | 330 mL (°C) | 350 mL (°C) | 1 L (°C) |
|---|---|---|---|---|---|
| A | 1030.5 | 1007.3 | 1038.8 | 1016.8 | 1016.4 |
| B | 796.5 | 740.3 | 804.7 | 749.1 | 776.4 |
| C | 687.4 | 634.1 | 665.6 | 657.4 | 622.1 |
| D | 683.4 | 618.8 | 614.8 | 636.2 | 605.0 |
| E | 679.2 | 618.7 | 638.5 | 620.6 | 604.5 |
| F | 673.9 | 615.3 | 621.2 | 630.8 | 594.4 |
| G | 637.4 | 592.8 | 581.8 | 570.8 | 578.0 |
| H | 605.3 | 579.3 | 561.9 | 570.9 | 571.4 |
| I | 172.5 | 147.4 | 179.3 | 145.6 | 176.4 |

The 200 mL bottle had a cooling rate at cold-end per inch °C of 0.38. The conveyor speed of the conveyor between the forming machine 712 and the transfer wheel 722 was 34" per second. The conveyor speed between the transfer wheel 722 and the lehr entrance was 26" per second. The 300 mL bottle had a cooling rate at cold-end per inch °C of 0.29. The conveyor speed of the conveyor between the forming machine 712 and the transfer wheel 722 was 21" per second. The conveyor speed between the transfer wheel 722 and the lehr entrance was 16" per second. The 330 mL bottle had a cooling rate at cold-end per inch °C of 0.40. The conveyor speed of the conveyor between the forming machine 712 and the transfer wheel 722 was 34" per second. The conveyor speed between the transfer wheel 722 and the lehr entrance was 25" per second. The 350 mL bottle had a cooling rate at cold-end per inch °C of 0.35. The conveyor speed of the conveyor between the forming machine 712 and the transfer wheel 722 was 22" per second. The conveyor speed between the transfer wheel 722 and the lehr entrance was 16" per second. The 1 L bottle had a cooling rate at cold-end per inch °C of 0.37. The conveyor speed of the conveyor between the forming machine 712 and the transfer wheel 722 was 15" per second. The conveyor speed between the transfer wheel 722 and the lehr entrance was 11" per second.

One advantage of using the aforementioned system is that there is no need for substantial modification to production lines to set a manufacturing facility up to manufacture glass articles using the methods of the present invention. For example, with the addition of bottle moving means, as well as, for example, a salt bath or spraying means, many of the features of the present invention may be utilized. Additionally, an annealing lehr may be used as a strengthening lehr merely by modifying the temperatures within the lehr. Finally, using the invention, glass may be selectively made using either annealing methods or the methods of the present invention depending on the requirements of the glass to be manufactured.

### EXAMPLES

A number of examples are presented herein using various methods according to the present invention. In order to simulate conditions on an actual production line, the bottles were preheated after being formed in a forming machine and prior to being dipped and placed into a furnace. In actual implementations of the invention, it is assumed that preheating would be unnecessary, and that the bottles may have an average temperature approximating the temperature to which the bottles were preheated to. Additionally, rather than using a furnace, a lehr may be used, as described above. The temperatures referred to herein are set-point temperatures unless otherwise stated. Table 2 presents the results of 10 trials run using various furnace temperature settings in association with the present invention.

**TABLE 2**

| Run | SnO₂ Coat (ctu) | Flame Polish | Preheat | | Salt Bath Temp (°C) | Dip Time (s) | Strengthening Temp. (° C) | Wt. (g) | Burst Press. (psi) | Control Burst Press. (psi) | Delta (psi) |
|---|---|---|---|---|---|---|---|---|---|---|---|
| | | | Time (min) | Temp (°C) | | | | | | | |
| 1 | 40 | Yes | 1 | 510 | 600 | 1 | 520 | 3.0 | 739 | 427 | 312 |
| 2 | 40.4 | Yes | 5 | 510 | 630 | 1 | 520 | 2.6 | 738 | 433 | 305 |
| 3 | 41.6 | No | 5 | 550 | 615 | 1 | 500 | 1.5 | 724 | 443 | 281 |
| 4 | 40.2 | Yes | 5 | 510 | 600 | 1 | 480 | 7.2 | 763 | 484 | 279 |
| 5 | 40.4 | No | 5 | 510 | 600 | 1 | 520 | 5.6 | 760 | 486 | 274 |
| 6 | 40 | No | 1 | 550 | 615 | 1 | 500 | 1.5 | 701 | 427 | 274 |
| 7 | 40 | Yes | 1 | 510 | 600 | 1 | 480 | 3.86 | 735 | 472 | 263 |
| 8 | 41.2 | Yes | 5 | 510 | 600 | 1 | 520 | 5.2 | 745 | 496 | 249 |
| 9 | 41 | No | 5 | 550 | 615 | 1 | 500 | 1.3 | 736 | 506 | 230 |
| 10 | 40.6 | No | 5 | 550 | 615 | 1 | 500 | 1.3 | 662 | 434 | 228 |

The type of glass used in making the bottles used in these examples was flint glass. As one of ordinary skill in the art will appreciate, varying the type of glass used to make glass articles using any of the methods according to the various embodiments of the invention, may require some optimization because of potentially different characteristics of the glass, such as, for example different annealing temperatures, different strain point temperatures, and different resulting strengths. The composition of the flint glass used in the following examples is summarized in Table 3, below.

**TABLE 3**

| **FLINT GLASS COMPOSITION** | |
|---|---|
| **OXIDES** | **COMPOSITION (%)** |
| SI02 | 72 |
| AL2O3 | 1.6 |
| FE2O3 | 0.7 |
| NA2O | 13 |
| K2O | 0.86 |
| MGO | 0.20 |
| CAO | 10 |
| SO3 | 0.21 |
| BAO | 0 |
| CR2O3 | 0.0010 |
| TIO2 | 0.019 |
| SRO | 0 |
| Annealing Point | 540°C |

### EXAMPLE 1

In a first example according to an embodiment of the invention, five bottles were formed in the forming machine and were coated with a tin oxide hot-end coating. Then the bottles were flame polished. The tin oxide coating had a thickness of 40 ctu. To simulate conditions as they might occur in an actual production line, the bottles were preheated at a temperature of 510 °C for one minute. After being preheated, the bottles were dipped in a salt bath. The salt bath consisted of 50/50 KCl/KNO₃ and was kept at a temperature of 600 °C. The bottles were then dipped in the salt bath for 1 second. The average weight of the salt that adhered to the bottles was 3.0 grams. The amount of salt that adheres to the bottle is a function of both the temperature of the salt bath and the temperature of the bottle before it is placed in the salt bath. After being dipped, the bottles underwent a heat treatment, which allows the reaction (i.e., the ion exchange between the sodium ions and the potassium ions) to take place more efficiently and more readily. The heat treatment was performed in a furnace for a time of 20 minutes and at a temperature of 520 °C. This process was repeated three more times to construct a total of 20 strengthened glass bottles. Additionally, 20 control bottles were made. The 20 control bottles had been annealed using a prior art annealing process in an annealing furnace but were not subjected to chemical strengthening.

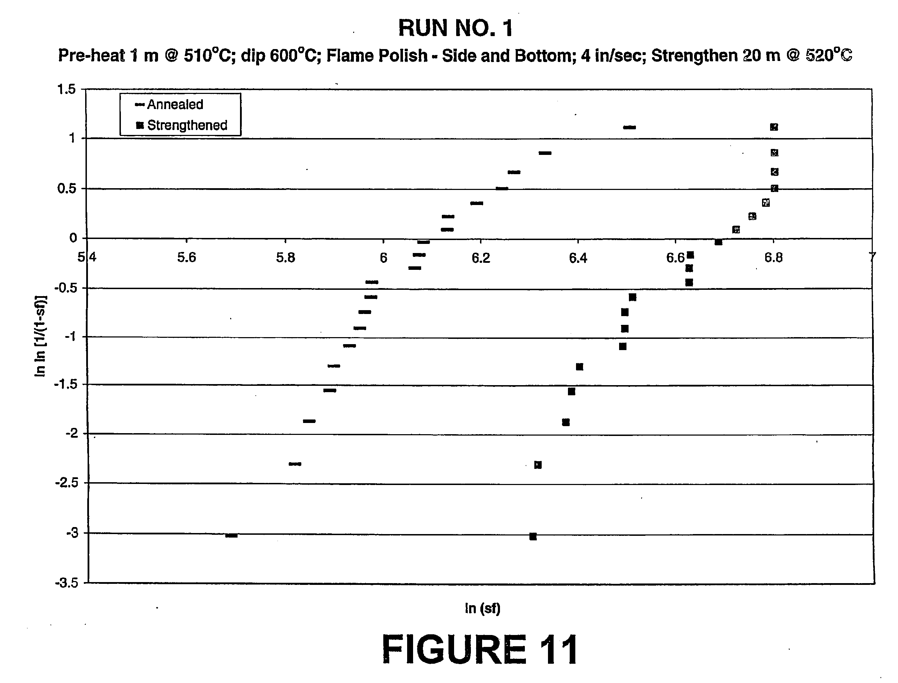

These forty bottles were then tested to determine how much internal pressure could be applied within the bottles before they burst. The average burst pressure of the strengthened bottles created using the temperatures mentioned above was 739 psi, as opposed to the average burst pressure applied to the control bottles of 427 psi, accounting for a burst pressure difference of 312 psi. These results are illustrated generally in the Weibull plot in Figure 11. The abscissa of the plot of Figure 11 is a measure of applied pressure and the ordinate reflects the probability of failure. Figure 11 shows that bottles strengthened according to a method of the invention were stronger than those strengthened by prior art annealing methods.

### EXAMPLE 2

In a second example according to an embodiment of the invention, five bottles were formed in the forming machine and were coated with a tin oxide hot-end coating. Then the bottles were flame polished. The tin oxide coating had a thickness of 40.4 ctu. To simulate the conditions as they might occur in an actual production line, the bottles were preheated at a temperature of 510 °C for five minutes. After being preheated, the bottles were was dipped in a salt bath. The salt bath consisted of 50/50 KCI/KNO₃ and was kept at a temperature of 630 °C. The bottles were then dipped in the salt bath for 1 second. The average weight of the salt that adhered to the bottle was 2.6 grams. Using Example 1 as a basis for comparison, one can see that less salt adhered to the surface of the bottle in this Example because the temperature of the salt bath was higher than that used in Example 1. This relationship verifies that the amount of salt that adheres to the bottle is a function of at least the temperature of the salt bath. After being dipped, the bottles underwent heat treatment, which allows the reaction (i.e., the ion exchange between the sodium ions and the potassium ions) to take place more efficiently and more readily. The heat treatment was performed in a furnace for a time of 20 minutes and at a temperature of 520 °C. This process was repeated three more times to construct a total of 20 strengthened glass bottles. Additionally, 20 control bottles were made. The 20 control bottles had been annealed using a prior art annealing process in an annealing furnace, but had not been subjected to chemical strengthening.

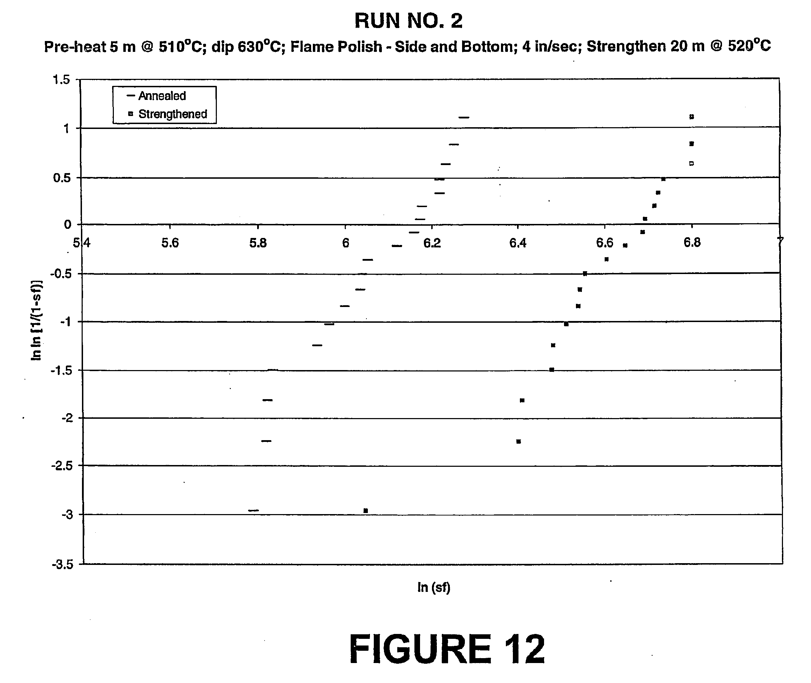

These forty bottles were then tested to determine how much internal pressure could be applied within the bottles before they burst. The average burst pressure of the strengthened bottles created using the temperatures mentioned above was 738 psi, as opposed to the average burst pressure applied to the control bottles of 433 psi, accounting for a pressure difference of 305 psi. Thus, this Example further illustrates the advantages of using a short salt bath followed by a period of heat strengthening in a furnace. These results are illustrated generally in the Weibull plot in Figure 12. Figure 12 shows that the bottles strengthened according to a method of the invention were stronger than those strengthened by prior art annealing methods.

### EXAMPLE 3

In a third example according to an embodiment of the invention, five bottles were formed in the forming machine and were coated with a tin oxide hot-end coating. Then the bottles were flame polished. The tin oxide coating had a thickness of 41.6 ctu. To simulate the conditions as they might occur in an actual production line, the bottles were preheated at a temperature of 550 °C for five minutes. After being preheated, the bottles were dipped in a salt bath. The salt bath consisted of 50/50 KCl/KNO₃ and was kept at a temperature of 615 °C. The bottles were then dipped in the salt bath for 1 second. The average weight of the salt that adhered to the bottle was 1.5 grams. Using Example 1 as a basis for comparison, one can see that less salt adhered to the surface of the bottle in this Example because the temperature of the salt bath was higher than that used in Example 1, and the temperature of the bottle was also greater than the temperature of the bottle used in Example 1. This relationship verifies that the amount of salt that adheres to the bottle is a function of both the temperature of the salt bath and the temperature of the bottle before it is placed in the salt bath. After being dipped, the bottles underwent heat treatment, which allows the reaction (i.e., the ion exchange between the sodium ions and the potassium ions) to take place more efficiently and more readily. The heat treatment was performed in a furnace for a time of 20 minutes and at a temperature of 500 °C. This process was repeated three more times to construct a total of 20 strengthened glass bottles. Additionally, 20 control bottles were made. The 20 control bottles had been annealed using a prior art annealing process in an annealing furnace, but had not been subjected to chemical strengthening.

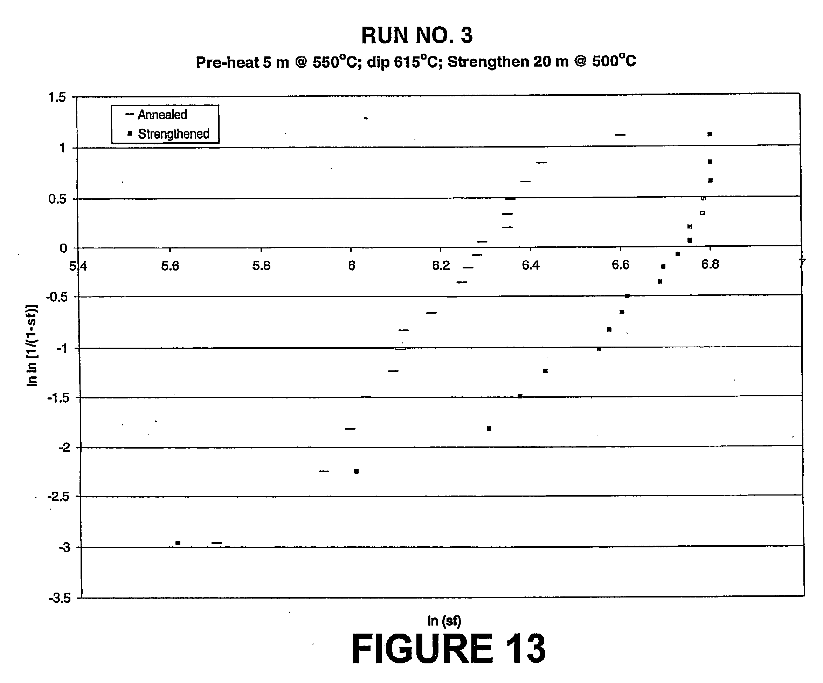

These forty bottles were then tested to determine how much internal pressure could be applied within the bottles before they burst. The average burst pressure that bottles created using the temperatures mentioned above was 724 psi, as opposed to the average burst pressure applied to the control bottles of 443 psi, accounting for a burst pressure difference of 281 psi. Thus, this Example further illustrates the advantages of using a short salt bath followed by a period of heat strengthening in a furnace. These results are illustrated generally in the Weibull plot in Figure 13. Figure 13 shows that the bottles strengthened according to a method of the invention were stronger than those strengthened by prior art annealing methods.

### EXAMPLE 4

In a fourth example according to an embodiment of the invention, five bottles were formed in the forming machine and were coated with a tin oxide hot-end coating. Then the bottles were flame polished. The tin oxide coating had a thickness of 40.2 ctu. To simulate the conditions as they might occur in an actual production line, the bottles were preheated at a temperature of 510 °C for five minutes. After being preheated, the bottles were dipped in a salt bath. The salt bath consisted of 50/50 KCl/KNO₃ and was kept at a temperature of 600 °C. The bottles were then dipped in the salt bath for 1 second. The average weight of the salt that adhered to the bottle was 7.2 grams. Using Example 1 as a basis for comparison, one can see that more salt adhered to the surface of the bottle in this Example. After being dipped, the bottles underwent heat treatment, which allows the reaction (i.e., the ion exchange between the sodium ions and the potassium ions) to take place more efficiently and more readily. The heat treatment was performed in a furnace for a time of 20 minutes and at a temperature of 480 °C. This process was repeated a total of three more times to construct a total of 20 strengthened glass bottles. The 20 control bottles had been annealed using a prior art annealing process in an annealing furnace, but had not been subjected to chemical strengthening.

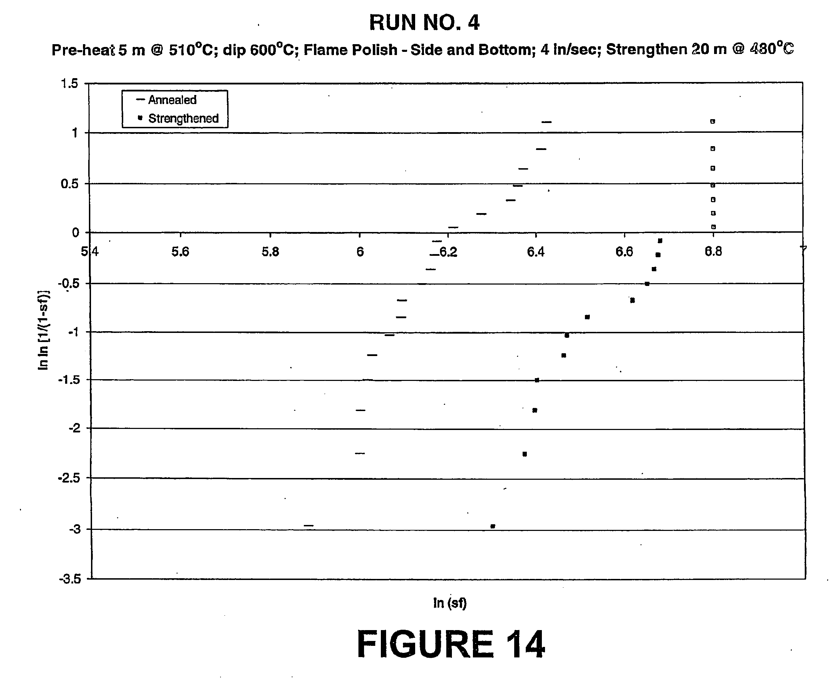

These forty bottles were then tested to determine how much internal pressure could be applied within the bottles before they burst. The average burst pressure that the strengthened bottles created using the temperatures mentioned above was 763 psi, as opposed to the average burst pressure applied to the control bottles of 484 psi, accounting for a burst pressure difference of 279 psi. Thus, this Example further illustrates the advantages of using a short salt bath followed by a period of heat strengthening in a furnace. These results are illustrated generally in the Weibull plot in Figure 14. Figure 14 shows that the bottles strengthened according to a method of the invention were stronger than those strengthened by prior art annealing methods

### EXAMPLE 5

In a fifth example according to an embodiment of the invention, five bottles were formed in the forming machine and were coated with a tin oxide hot-end coating. Then the bottles were flame polished. The tin oxide coating had a thickness of 40.4 ctu. To simulate the conditions as they might occur in an actual production line, the bottles were preheated at a temperature of 510 °C for five minutes. After being preheated, the bottles were dipped in a salt bath. The salt bath consisted of 50/50 KCl/KNO₃ and was kept at a temperature of 600 °C. The bottles were then dipped in the salt bath for 1 second. The weight of the salts that adhered to the bottle was 5.6 grams. After being dipped in the salt bath, the bottles underwent heat treatment, which allows the reaction (i.e., the ion exchange between the sodium ions and the potassium ions) to take place more efficiently and more readily. The heat treatment was performed in a furnace for a time of 20 minutes and at a temperature of 520 °C. This process was repeated a total of three more times to construct a total of 20 strengthened glass bottles. Additionally, 20 control bottles were made. The 20 control bottles had been annealed using a prior art annealing process in an annealing furnace, but had not been subjected to chemical strengthening.

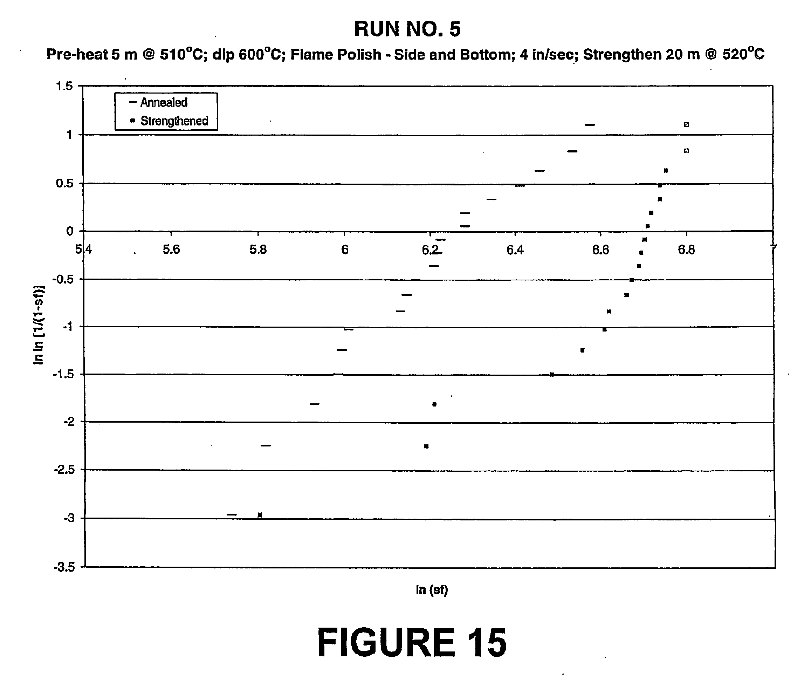

These forty bottles were then tested to determine how much internal pressure could be applied within the bottles before they broke. The average pressure that the strengthened bottles created using the temperatures mentioned above was 760 psi, as opposed to the average pressure applied to the control bottles of 486 psi, accounting for a pressure difference of 274 psi. Thus, this Example further illustrates the advantages of using a short salt bath followed by a period of heat strengthening in a furnace. These results are illustrated generally in the Weibull plot in Figure 15. Figure 15 shows that the bottles strengthened according to a method of the invention were stronger than those strengthened by prior art annealing methods.

### EXAMPLE6

In a sixth example according to an embodiment of the invention, five bottles were formed in the forming machine and were coated with a tin oxide hot-end coating. Then the bottles were flame polished. The tin oxide coating had a thickness of 40 ctu. In this example, the bottles were not flame polished. To simulate the conditions as they might occur in an actual production line, the bottles were preheated at a temperature of 550 °C for one minute. After being preheated, the bottles were dipped in a salt bath. The salt bath consisted of 50/50 KCl/KNO₃ and was kept at a temperature of 615 °C. The bottles was then dipped in the salt bath for 1 second. The average weight of the salt that adhered to the bottle was 1.5 grams. After being dipped, the bottle underwent heat treatment, which allows the reaction (i.e., the ion exchange between the sodium ions and the potassium ions) to take place more efficiently and more readily. The heat treatment was performed in a furnace for a time of 20 minutes and at a temperature of 500 °C. This process was repeated a total of three more times to construct a total of 20 strengthened glass bottles. Additionally, 20 control bottles were made. The 20 control bottles had been annealed using a prior art annealing process in an annealing furnace, but had not been subjected to chemical strengthening.

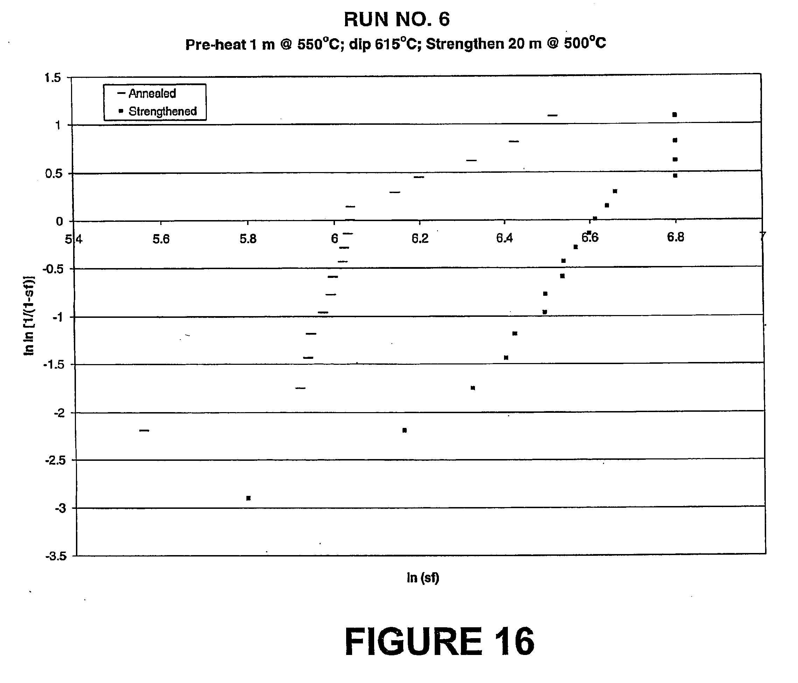

These forty bottles were then tested to determine how much internal pressure could be applied within the bottles before they burst. The average burst pressure that the strengthened bottles created using the temperatures mentioned above was 701 psi, as opposed to the average burst pressure applied to the control bottles of 427 psi, accounting for a burst pressure difference of 274 psi. Thus, this Example further illustrates the advantages of using a short salt bath followed by a period of heat strengthening in a furnace. These results are illustrated generally in the Weibull plot in Figure 16. Figure 16 shows that the bottles strengthened according to a method of the invention were stronger than those strengthened by prior art annealing methods.

### EXAMPLE 7

In a seventh example according to an embodiment of the invention, five bottles were formed in the forming machine and were coated with a tin oxide hot-end coating. Then the bottles were flame polished. The tin oxide coating had a thickness of 40 ctu. To simulate the conditions as they might occur in an actual production line, the bottles were preheated at a temperature of 510 °C for one minute. After being preheated, the bottles were dipped in a salt bath. The salt bath consisted of 50/50 KCI/KNO₃ and was kept at a temperature of 600 °C. The bottles were then dipped in the salt bath for 1 second. The average weight of the salt that adhered to the bottle was 3.86 grams. After being dipped, the bottles underwent a heat treatment, which allows the reaction (i.e., the ion exchange between the sodium ions and the potassium ions) to take place more efficiently and more readily. The heat treatment was performed in a furnace for a time of 20 minutes and at a temperature of 480 °C. This process was repeated a total of three more times to construct a total of 20 strengthened glass bottles. Additionally, 20 control bottles were made. The 20 control bottles had been annealed using a prior art annealing process in an annealing furnace, but had not been subjected to chemical strengthening.

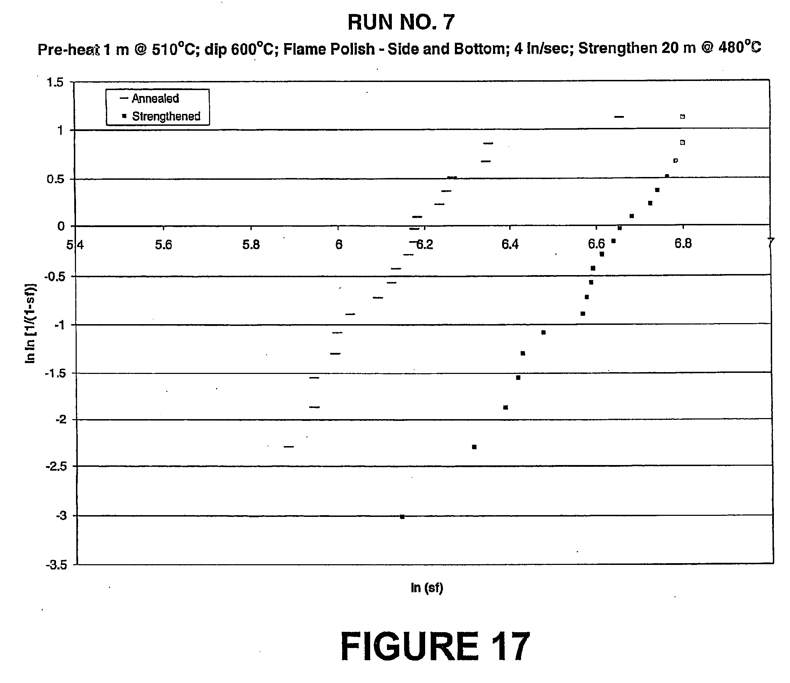

These forty bottles were then tested to determine how much internal pressure could be applied within the bottles before they burst. The average burst pressure that the strengthened bottles created using the temperatures mentioned above was 735 psi, as opposed to the average burst pressure applied to the control bottles of 472 psi, accounting for a burst pressure difference of 263 psi. Thus, this Example further illustrates the advantages of using a short salt bath followed by a period of heat strengthening in a furnace. These results are illustrated generally in the Weibull plot in Figure 17. Figure 17 shows that the bottles strengthened according to a method of the invention were stronger than those strengthened by prior art annealing methods.

### EXAMPLE 8

In a eighth example according to an embodiment of the invention, five bottles were formed in the forming machine and were coated with a tin oxide hot-end coating. Then the bottles were flame polished. The tin oxide coating had a thickness of 41.2 ctu. To simulate the conditions as they might occur in an actual production line, the bottles were preheated at a temperature of 510 °C for one minute. After being preheated, the bottles were dipped in a salt bath. The salt bath consisted of 50/50 KCl/KNO₃ and was kept at a temperature of 600 °C. The bottles were then dipped in the salt bath for 1 second. The average weight of the salt that adhered to the bottle was 5.2 grams. After being dipped, the bottles underwent heat treatment, which allows the reaction (i.e., the ion exchange between the sodium ions and the potassium ions) to take place more efficiently and more readily. The heat treatment was performed in a furnace for a time of 20 minutes and at a temperature of 520 °C. This process was repeated a total of three more times to construct a total of 20 strengthened glass bottles. Additionally, 20 control bottles were made. The 20 control bottles had been annealed using a prior art annealing process in an annealing furnace, but had not been subjected to chemical strengthening.

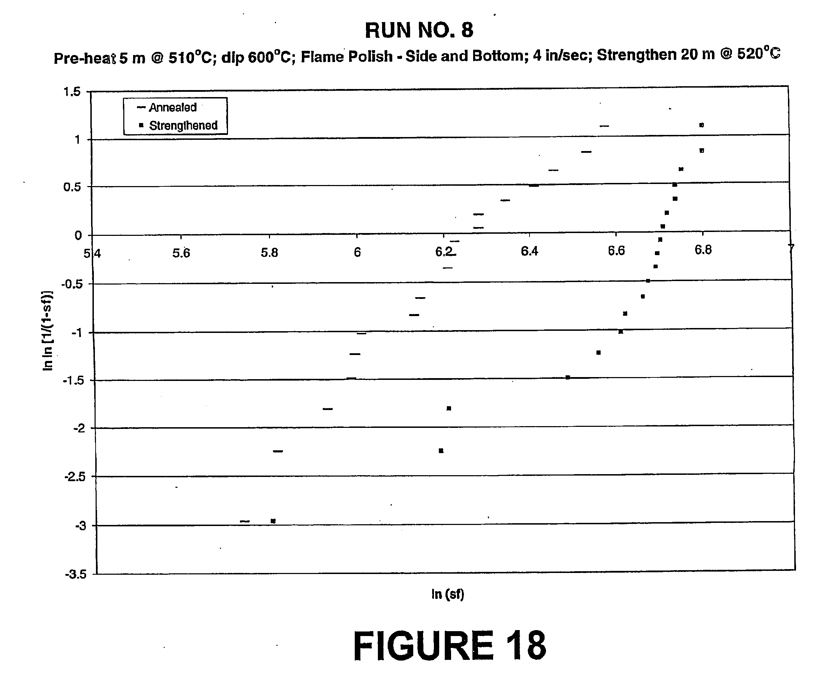

These forty bottles were then tested to determine how much internal pressure could be applied within the bottles before they burst. The average burst pressure that the strengthened bottles created using the temperatures mentioned above was 745 psi, as opposed to the average maximum burst pressure applied to the control bottles of 496 psi, accounting for a burst pressure difference of 249 psi. Thus, this Example further illustrates the advantages of using a short salt bath followed by a period of heat strengthening in a furnace. These results are illustrated generally in the Weibull plot in Figure 18. Figure 18 shows that the bottles strengthened according to a method of the invention were stronger than those strengthened by prior art annealing methods.

### EXAMPLE 9

In a ninth example according to an embodiment of the invention, five bottles were formed in the forming machine and were coated with a tin oxide hot-end coating. Then the bottles were flame polished. The tin oxide coating had a thickness of 41.0 ctu. A tin oxide coating was then applied to the glass. The tin oxide coating had a thickness of 40 ctu. To simulate the conditions as they might occur in an actual production line, the bottles were preheated at a temperature of 550 °C for five minutes. After being preheated, the bottles were dipped in a salt bath. The salt bath consisted of 50/50 KCl/KNO₃ and was kept at a temperature of 615 °C. The bottles were then dipped in the salt bath for 1 second. The average weight of the salt that adhered to the bottle was 1.3 grams. After being dipped, the bottle underwent heat treatment, which allows the reaction (i.e., the ion exchange between the sodium ions and the potassium ions) to take place more efficiently and more readily. The heat treatment was performed in a furnace for a time of 20 minutes and at a temperature of 500 °C. This process was repeated a total of three more times to construct a total of 20 strengthened glass bottles. Additionally, 20 control bottles were made. The 20 control bottles had been annealed using a prior art annealing process in an annealing furnace, but had not been subjected to chemical strengthening.

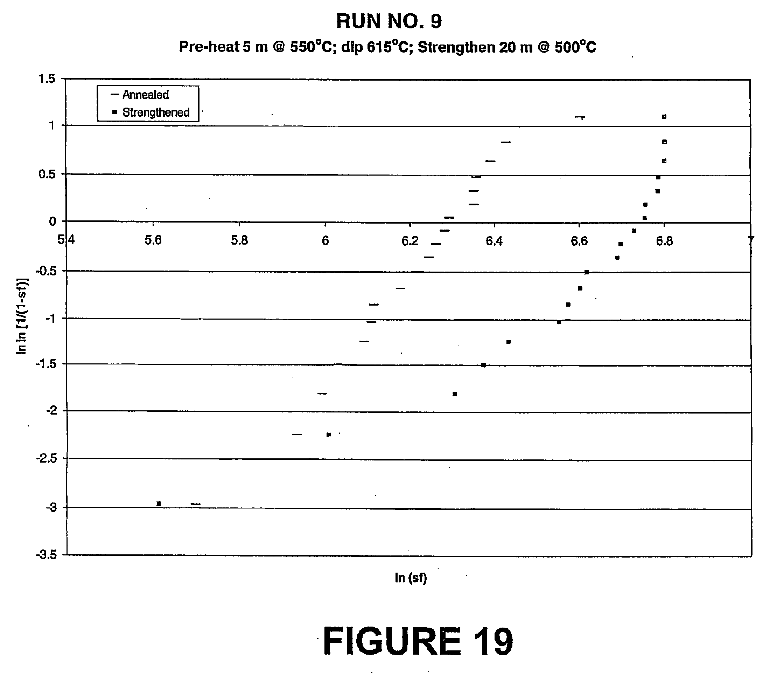

These forty bottles were then tested to determine how much internal pressure could be applied within the bottles before they burst. The average burst pressure that the strengthened bottles created using the temperatures mentioned above was 736 psi, as opposed to the average maximum burst pressure applied to the control bottles of 506 psi, accounting for a burst pressure difference of 230 psi. Thus, this Example further illustrates the advantages of using a short salt bath followed by a period of heat strengthening in a furnace. These results are illustrated generally in the Weibull plot in Figure 19. Figure 19 shows that the bottles strengthened according to a method of the invention were stronger than those strengthened by prior art annealing methods.

### EXAMPLE 10

In a tenth example according to an embodiment of the invention, five bottles were formed in the forming machine and were coated with a tin oxide hot-end coating. Then the bottles were flame polished. The tin oxide coating had a thickness of 40.6 ctu. To simulate the conditions as they might occur in an actual production line, the bottles were preheated at a temperature of 550 °C for five minutes. After being preheated, the bottles were dipped in a salt bath. The salt bath consisted of 50/50 KCl/KNO₃ and was kept at a temperature of 615 °C. The bottles were then dipped in the salt bath for 1 second. The average weight of the salt that adhered to the bottle was 1.3 grams. After being dipped, the bottles underwent heat treatment, which allows the reaction (i.e., the ion exchange between the sodium ions and the potassium ions) to take place more efficiently and more readily. The heat treatment was performed in a furnace for a time of 20 minutes and at a temperature of 500 °C. This process was repeated a total of three more times to construct a total of 20 strengthened glass bottles. Additionally, 20 control bottles were made. The 20 control bottles had been annealed using a prior art annealing process in an annealing furnace, but had not been subjected to chemical strengthening.

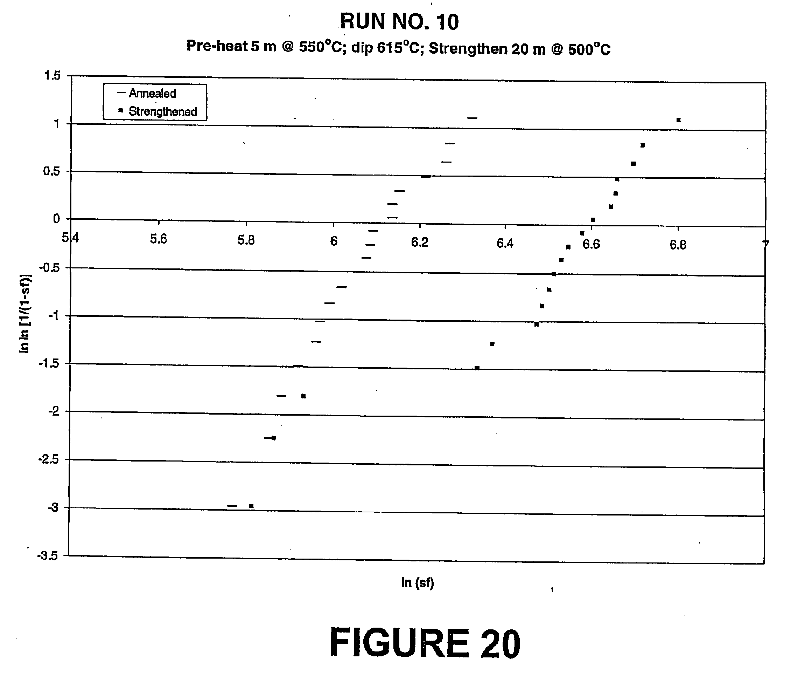

These forty bottles were then tested to determine how much internal pressure could be applied within the bottles before they burst. The average burst pressure that the strengthened bottles created using the temperatures mentioned above was 662 psi, as opposed to the average burst pressure applied to the control bottles of 434 psi, accounting for a burst pressure difference of 228 psi. Thus, this Example further illustrates the advantages of using a short salt bath followed by a period of heat strengthening in a furnace. These results are illustrated generally in the Weibull plot in Figure 20. Figure 20 shows the advantages of dipping the bottles in the salt solution prior to performing heat strengthening according to an embodiment of the invention. The abscissa of the plot in Figure 20 is a measure of applied stress and the ordinate is a measure of the probability of failure.

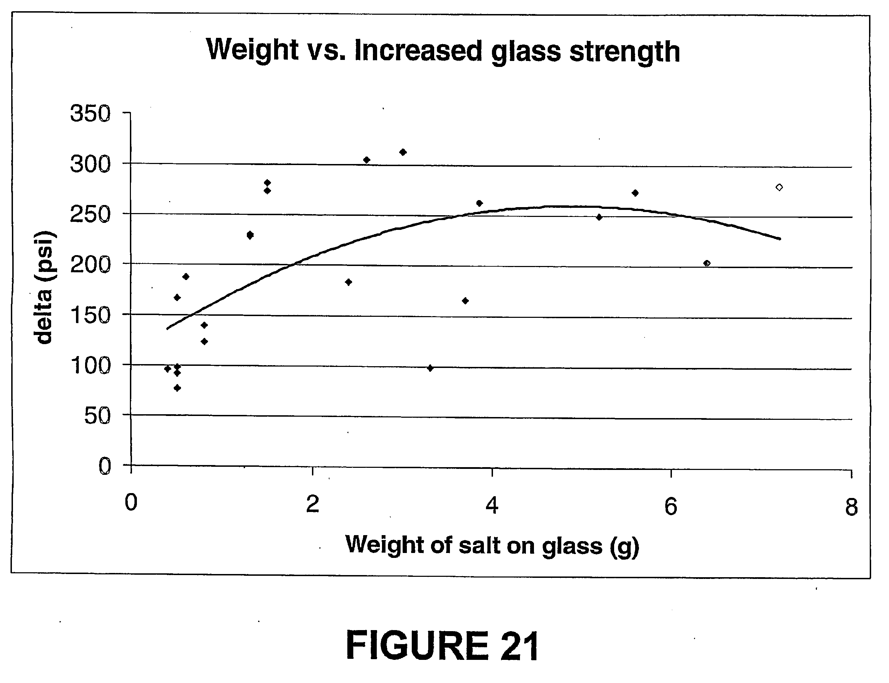

As described in some detail with respect to Examples 1-10, the weight of the salt adhering to the surface of each of the bottles depends on at least the following factors: (1) the temperature of the bottles and (2) the temperature of the salt bath. Based on another set of tests, it was determined that if too little salt adhered to the glass, there was a negative impact on the glass strength. Additionally, as the amount of salt adhering to the glass was increased, there was a clear indication of diminishing returns. The plot illustrated in Figure 21 illustrates this point. Therefore, in some embodiments of the invention, particularly where cost is a concern, temperatures of the salt bath and the bottles prior to dipping (or in alternative embodiments, spraying) may be tailored so that approximately, for example, between 1 and 3 grams of salt solution adheres to the bottles.

### EXAMPLE 11

An additional set of tests was performed using both a 200 mL bottle and a 330 mL bottle. The test data appears in Table 4, below. This data demonstrates that as the temperature of the glass during ion-exchange approaches, and reaches the annealing temperature of the glass, most of the benefits of using a chemical ion exchange process to strengthen glass are lost. In one case, the treated bottles had only 17 psi greater burst pressure than the control, and in another case, the treated bottle actually had 1 psi smaller burst pressure than the control. Therefore, this data demonstrates the relative importance of keeping the temperature of the glass below the annealing point after applying the salt coating to the glass, using for example a spraying or a dipping process. The strengthening lehr profiles and the annealing lehr profile used to produce the treated and control bottles are illustrated in Figures8A and 8B, described above.

**TABLE 4**

| **Run** | **Pre-Heat** | | **Time (s)** | **Dip Temp (°C)** | **Strengthening** | | **SnO₂ Coat (ctu)** | **Coat Wt. (g)** | **Wt./cm² (g/cm²)** | **IE (psi)** | **Ann. (psi)** | **Delta (psi)** |
|---|---|---|---|---|---|---|---|---|---|---|---|---|
| | **min.** | **Temp (°C)** | | | **min.** | **Lehr temp (°C)** | | | | | | |
| 1 | 10 | 540 | 1 | 606 | Ann. Profile | | 42 | 1.45 | 0.00474 | 680 | 681 | -1 |
| 2 | 1 | 540 | 1 | 630 | Ann. Profile | | 42.5 | 1.9 | 0.00621 | 606 | 589 | 17 |

### EXAMPLE 12

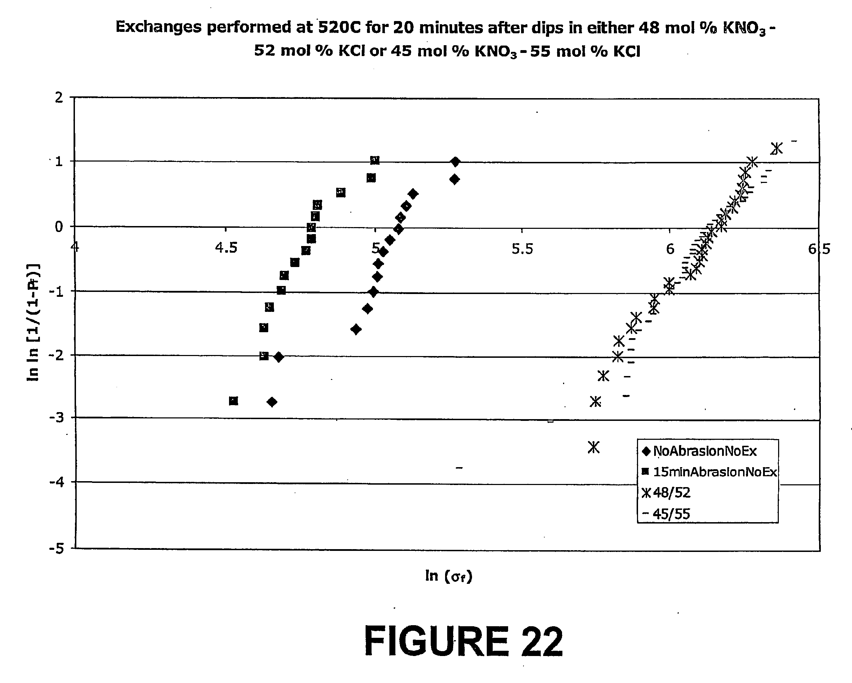

Glass rods were subjected to 15 minutes of abrasion by tumbling them with sand for 15 minutes. A first set of rods were immersed for approximately 5 seconds in a molten bath of 48 mol% KNO₃ and 52 mol% KCl, then subjected to heat treatment at 520°C for 20 minutes. A second set of rods were immersed for approximately 5 seconds in a molten bath of 45 mol% KNO₃ and 55 mol% KCl, then subjected to heat treatment at 520°C for 20 minutes. Both sets of rods were cooled and the salt washed away with a cold water spray. The results of these two trials are shown in Figure 22. Control rods subjected to abrasion with no ion-exchange treatment were less strong than control rods not subjected to abrasion with no ion-exchange treatment, as expected. However, both sets of rods subjected to abrasion followed by ion-exchange treatment were much stronger than both sets of control rods.

### EXAMPLE 13

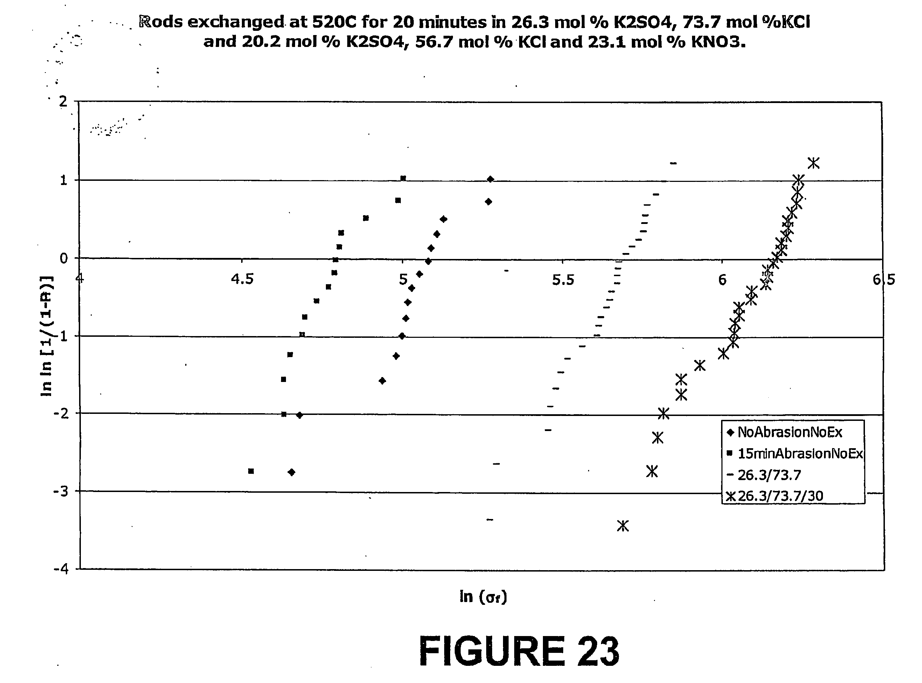

Glass rods were subjected to 15 minutes of abrasion by tumbling them with sand for 15 minutes. A first set of rods were immersed for approximately 5 seconds in a molten bath of 26.3 mol% K₂SO₄ and 73.7 mol% KCl having a bath temperature of 730°C, then subjected to heat treatment at 520°C for 20 minutes. A second set of rods were immersed for approximately 5 seconds in a molten bath of 20.2 mol% K₂SO₄, 56.7 mol% KCl, and 23.1 mol% KNO₃ having a bath temperature of 645°C, then subjected to heat treatment at 520°C for 20 minutes. Both sets of rods were cooled and the salt washed away with a warm water spray. The results of these two trials are shown in Figure 23. Control rods subjected to abrasion with no ion-exchange treatment were less strong than control rods not subjected to abrasion with no ion-exchange treatment, as expected. However, both sets of rods subjected to abrasion followed by ion-exchange treatment were much stronger than both sets of control rods. The rods dipped in the K₂SO₄/KCl/KNO₃ bath were stronger than those dipped in the K₂SO₄/KCl bath.

### EXAMPLE 14

Glass bottles exited the forming machine at a temperature of approximately 600°C. The annealing point of the glass was 550°C, and the strain point was 530°C. The bottles were annealed and cooled to room temperature. The bottles were pre-heated to approximately 665°C, then sprayed with a 50/50 weight percent aqueous solution of potassium phosphate (K₃PO₄). The bottles were then maintained at a temperature of about 500°C for approximately 45 minutes during the ion-exchange reaction. As the bottles exited the strengthening furnace, the salt solution was rinsed from the bottles with a cold-water spray.

Table 5, which follows, demonstrates the superior strength characteristics of bottles manufactured using the method described in this example, compared to control bottles prepared by prior art methods. The impact resistance of the glass was measured with an AGR Pendulum Impact Tester using the straight bar-backstop. The tests were conducted in a progressive style, starting at a 20 in/sec level, and increasing in increments of 5 in/sec. One sample of bottles was used to measure the impact resistance at the shoulder contact. A second sample of bottles was used to measure the impact resistance at the heel contact. For the shoulder and heel impact data, each bottle was impacted at 10 locations equally spaced around the circumference at the shoulder contact.

**TABLE 5**

| | **Shoulder Impact (ips)** | **Heel Impact (ips)** | **Pressure (psi)** | **Empty Drop Height (in)** | **Filled Drop Height (in)** |
|---|---|---|---|---|---|
| **Control Bottles** | 74 | 85 | 389 | 35 (164 inches/sec) | 26 (142 inches/sec) |
| **Bottles manufactured by the method of Example 1** | 113+ | 112+ | 730+ | 59 (214 inches/sec) | 38 (171 inches/sec) |

While the preceding sections describe several embodiments, they are not meant to limit the scope of the invention in any way. For example, while particular embodiments were described using a dipping method, glass may be coated with a hot salt solution using, for example, a spray method, chemical vapor deposition, or flame spraying, as described above. Additionally, while the hot-end coating applied to the bottles was described as being tin oxide, any number of coatings may be applied to the glass. Alternatively, as described above, no coating need be applied to the glass.

Additionally, the invention was described in terms of strengthening glass bottles. The methods of the invention are equally applicable to strengthen all types of glass articles. It will be apparent to those skilled in the art that various modifications and variations can be made in the apparatus and methods of the invention without departing from their spirit and scope. It should also be noted that true definitions of the terms "strain point temperature" and "annealing point temperature" are not to be literally construed as one of ordinary skill in the art is aware that the rate of stress release in a glass will depend on the shear modulus, and therefore the definitions are merely an approximation. Each patent and other citation herein is incorporated by reference in its entirety.

The following clauses set out features of the invention which may not presently be claimed but which may form the basis for future amendment or a divisional application.
1. A method, comprising the steps of : forming a glass article from molten glass, the glass having an annealing point temperature; dipping the formed glass article in a molten salt bath, the salt bath comprising potassium ions wherein the surface temperature of the glass article is at least the annealing point temperature of the glass during the dipping step; and maintaining the glass article at a temperature between the strain point temperature of the glass and about 150°C below the strain point temperature for at least about five minutes, wherein the glass remains at a temperature greater than the annealing point temperature of the glass from the forming step to the dipping step.
2. The method of clause 1, wherein the surface temperature of the glass article is at least about 25°C above the annealing point temperature of the glass.
3. The method of clause 1, wherein the glass article is dipped in the salt bath for less than about one minute.
4. The method of clause 1, wherein the glass article is dipped in the salt bath for about 10 seconds or less.
5. The method of clause 1, wherein the glass article is dipped in the salt bath for between about 0.5 second and about 30 seconds.
6. The method of clause 1, wherein the glass article is dipped in the salt bath for between about 3 and about 5 seconds.
7. The method of clause 1, wherein the salt bath comprises potassium nitrate and potassium chloride.
8. The method of clause 7, wherein the potassium nitrate is in the range of 40-60 mol% and, the potassium chloride is in the range of 40-60 mol%.
9. The method of clause 1, wherein the salt bath comprises potassium sulfate and potassium chloride.
10. The method of clause 1, wherein the salt bath comprises a combination of at least two of potassium nitrate, potassium chloride, and potassium sulfate.
11. The method of clause 1, wherein the salt bath comprises a combination of at least two of potassium nitrate, potassium chloride, and potassium sulfate, the combination having a melting point of at least 550°C.
12. The method of clause 1, wherein the salt bath has a temperature of between about 550°C and about 750°C.
13. The method of clause 1, wherein maintaining the glass article is at a temperature between the strain point temperature and about 130°C below the strain point temperature.
14. The method of clause 1, wherein the strain point temperature is about 530°C.
15. The method of clause 1, further comprising: flame polishing the glass article prior to dipping the glass article in the salt bath.
16. The method of clause 1, further comprising: after the step of maintaining, cooling the glass article, removing residual salt from the glass article and applying a protective scuff resistant coating to the surface of the glass article.
17. An apparatus, comprising: a staging area; a glass article moving means for moving a glass article after forming of the glass article and prior to cooling the glass article to a temperature below the annealing point temperature of the glass article; a salt bath, the salt bath comprising molten salt, the glass article moving means being configured to move the glass article from the staging area and dip the glass article into the salt bath, the glass article moving means being configured to dip glass articles having a surface temperatures of at least the annealing point temperature of the glass, the glass article being configured to remain in the salt bath for less than about one minute; and a strengthening lehr, the strengthening lehr being configured to keep the glass article at a temperature between the strain point temperature of the glass and about 150°C below the strain point temperature for at least about five minutes.
18. The apparatus of clause 17, wherein the glass article moving means is configured to dip the glass article in the salt bath for about 10 seconds or less.
19. The apparatus of clause 17, wherein the glass article moving means is configured to dip the glass article in the salt bath for between about 0. 5 second and about 30 seconds.
20. The apparatus of clause 17, wherein the glass article moving means is configured to dip the glass article in the salt bath for between about 3 and about 5 seconds.
21. The apparatus of clause 17, wherein the salt bath comprises potassium nitrate and potassium chloride.
22. The apparatus of clause 21, wherein the potassium nitrate is in the range of 40-60 mol% and the potassium chloride is in the range of 40-60 mol%.
23. The apparatus of clause 17, wherein the salt bath comprises potassium sulfate and potassium chloride.
24. The apparatus of clause 17, wherein the salt bath comprises a combination of at least two of potassium nitrate, potassium chloride, and potassium sulfate.
25. The apparatus of clause 17, wherein the salt bath comprises a combination of at least two of potassium nitrate, potassium chloride, and potassium sulfate, the combination having a melting point of at least 550°C.
26. The apparatus of clause 17, wherein the strengthening lehr is configured to keep the glass article at a temperature between the strain point temperature of the glass and about 130°C below the strain point temperature.
27. The apparatus of clause 17, wherein the strain point temperature is about 530°C.
28. The apparatus of clause 17, further comprising: flame polishing means, the flame polishing means being configured to flame polish the glass articles.
29. The apparatus of clause 28, wherein the flame polishing means is a first flame polishing means configured to flame polish the sides of the glass article, the apparatus further comprising: a second flame polishing means configured to flame polish the bottoms of the glass articles.
30. The apparatus of clause 17, further comprising: a coating mechanism configured to apply a protective scuff resistant coating to the surface of the glass article after the glass article has been removed from the strengthening lehr.
31. A glass manufacturing facility comprising a glass forming machine configured to form glass articles, and a strengthening lehr, the improvement comprising: a salt bath comprising molten salt, the glass articles being dipped into the salt bath for less than about one minute, the glass articles having a surface temperature at least above the annealing point temperature of the glass while being dipped in the salt bath; and a strengthening lehr, the strengthening lehr being configured to maintain the temperature of the glass articles at a temperature between the strain point temperature of the glass and about 150°C below the strain point temperature for at least about five minutes, the glass manufacturing facility being configured to dip the glass articles in the salt bath prior to the glass articles while the glass articles are still hot after being formed by the forming machine.
32. The glass manufacturing facility of clause 31, further comprising: a glass article handling means, the glass article handling means being configured to dip the glass articles in the salt bath.
33. The glass manufacturing facility of clause 31, wherein the glass articles are dipped in the salt bath for about 10 seconds or less.
34. The glass manufacturing facility of clause 31, wherein the glass articles are dipped in the salt bath for between about 0. 5 second and about 30 seconds.
35. The apparatus of clause 31, wherein the glass articles are dipped in the salt bath for between about 3 and about 5 seconds.
36. The glass manufacturing facility of clause 31, wherein the salt bath comprises potassium nitrate and potassium chloride.
37. The glass manufacturing facility of clause 31, wherein the potassium nitrate is in the range of 40-60 mol% and the potassium chloride is in the range of 40-60 mol%.
38. The glass manufacturing facility of clause 31, wherein the salt bath comprises potassium sulfate and potassium chloride.
39. The glass manufacturing facility of clause 31, wherein the salt bath comprises a combination of at least two of potassium nitrate, potassium chloride, and potassium sulfate.
40. The glass manufacturing facility of clause 31, wherein the sale bath comprises a combination of at least two of potassium nitrate, potassium chloride, and potassium sulfate, the combination having a melting point of at least 550°C.
41. The glass manufacturing facility of clause 31 wherein the strengthening lehr is configured to maintain the glass articles at a temperature between the strain point temperature and about 130°C below the strain point temperature.
42. The glass manufacturing facility of clause 31 wherein the strain point temperature is about 530°C.
43. The glass manufacturing facility of clause 31, further comprising: flame polishing means, the flame polishing means being configured to flame polish the glass articles.
44. The glass manufacturing facility of clause 43, wherein the flame polishing means is a first flame polishing means configured to flame polish the sides of the glass article, the apparatus further comprising: a second flame polishing means configured to flame polish the bottoms of the glass articles.
45. The glass manufacturing facility of clause 31, further comprising: a coating mechanism configured to apply a protective scuff resistant coating to the surface of the glass article after the glass article has been removed from the strengthening lehr.
46. A method for strengthening a glass article, comprising: forming the glass article from molten glass, the glass having an annealing point temperature ; applying potassium ions to the surface of the glass article before the glass article cools below the annealing point of the glass following the formation of the glass article, wherein the surface temperature of the glass article is at least the annealing point temperature of the glass during the applying step; and maintaining the glass article at a temperature between the strain point temperature of the glass and about 150°C below the strain point temperature for at least about five minutes.
47. The method of clause 46, wherein the step of applying the potassium ions to the surface of the glass article is accomplished by dipping the glass article in a salt bath for less than about 10 seconds.
48. The method of clause 46, wherein the glass article is dipped in the salt bath for about 0.5 second and about 30 seconds.
49. The method of clause 46, wherein the step of applying the potassium ions to the surface of the glass article is accomplished by dipping the glass article in a salt bath for between about 3 and about 5 seconds.
50. The method of clause 46, wherein the step of applying potassium ions to the surface of the glass article is accomplished by spraying potassium ions on the surface of the glass article.
51. The method of clause 50, wherein spraying comprises flame spraying.
52. The method of clause 50, wherein the spraying comprises electrostatic spraying.
53. The method of clause 50, wherein the spraying step comprises power spraying.
52. The method of clause 50, wherein the spraying comprises electrostatic spraying.
53. The method of clause 50, wherein the spraying step comprises power spraying.
54. The method of clause 46, wherein the step of applying potassium ions to the surface of the glass article is accomplished by chemical vapor deposition (CVD).
55. The method of clause 46, wherein the glass article is at a temperature of at least about 25°C above the annealing point of the glass during the applying step.
56. The method of clause 46, wherein the glass article is at a temperature of at least about 50°C above the annealing point of the glass during the applying step.
57. The method of clause 46, wherein the surface of the glass article is at a temperature of at least about 80°C above the annealing point of the glass during the applying step.
58. The method of clause 46 wherein maintaining the glass article is at a temperature between the strain point temperature and about 130°C below the strain point temperature.
59. The method of clause 46 wherein the strain point temperature is about 530°C.
60. The method of clause 46, further comprising: after the step of maintaining, applying a protective scuff resistant coating to the surface of the glass article.
61. A method, comprising : forming a glass article from molten glass; dipping the formed glass article in a salt bath before the glass article cools below the annealing point of the glass following the formation of the glass article, the salt bath comprising potassium ions, the glass articles being dipped for less than about 30 seconds; and maintaining the glass article at a temperature between the strain point temperature of the glass and about 150°C below the strain point temperature for at least about five minutes.
62. The method of clause 61, wherein the glass article is dipped in the salt bath for about 20 seconds or less.
63. The method of clause 61, wherein the glass article is dipped in the salt bath for about 10 seconds or less.
64. The method of clause 61, wherein the glass article is dipped in the salt bath for between about 3 and about 5 seconds.
65. The method of clause 61, wherein the salt bath comprises potassium nitrate and potassium chloride.
66. The method of clause 65, wherein the potassium nitrate is in the range of 40-60 mol% and the potassium chloride is in the range of 40-60 mol%.
67. The method of clause 61, wherein the salt bath comprises potassium sulfate and potassium chloride.
68. The method of clause 61, further comprising: flame polishing the glass article prior to dipping the article in the salt bath.
69. The method of clause 61, further comprising: after the step of maintaining, applying a protective scuff resistant coating to the surface of the glass article.
70. The method of clause 61, wherein the salt bath has a temperature of between about 550°C and about 750°C.
71. The method of clause 61 wherein maintaining the glass article is at a temperature between the strain point temperature and about 130°C below the strain point temperature.
72. The method of clause 61 wherein the strain point temperature is about 530°C.

## Claims

1. An apparatus, comprising:
a staging area;
a glass article moving means for moving a glass article after forming of the glass article and prior to cooling the glass article to a temperature below the annealing point temperature of the glass article;
a salt bath, the salt bath comprising molten salt, the glass article moving means being configured to move the glass article from the staging area and dip the glass article into the salt bath for 10 seconds or less, the glass article moving means being configured to dip glass articles having a surface temperatures of at least the annealing point temperature of the glass, the temperature of the salt bath being greater than the surface temperature of the article immediately preceding dipping; and
a strengthening lehr, the strengthening lehr being configured to keep the glass article at a temperature between the strain point temperature of the glass and about 150°C below the strain point temperature for at least five minutes.

2. The apparatus of claim 1, wherein the glass article moving means is configured to dip the glass article in the salt bath for between 3 and 5 seconds.

3. The apparatus of claim 1 or 2, wherein the salt bath comprises potassium nitrate in the range of 40-60 mol% and potassium chloride in the range of 40-60 mol%.

4. The apparatus of any of claims 1, 2 or 3, wherein the salt bath comprises a combination of at least two of potassium nitrate, potassium chloride, and potassium sulfate.

5. The apparatus of any of claims 1 to 4, wherein the salt bath comprises a combination of at least two of potassium nitrate, potassium chloride, and potassium sulfate, the combination having a melting point of at least 550°C.

6. The apparatus of any of claims 1 to 5, wherein the strengthening lehr is configured to keep the glass article at a temperature between the strain point temperature of the glass and 130°C below the strain point temperature.

7. The apparatus of any of claims 1 to 6, wherein the strain point temperature is about 530°C.

8. The apparatus of any of claims 1 to 7, further comprising:
flame polishing means, the flame polishing means being configured to flame polish the glass articles.

9. The apparatus of claim 8, wherein the flame polishing means is a first flame polishing means configured to flame polish the sides of the glass article, the apparatus further comprising:
a second flame polishing means configured to flame polish the bottoms of the glass articles.

10. The apparatus of any of claims 1 to 9, further comprising:
a coating mechanism configured to apply a protective scuff resistant coating to the surface of the glass article after the glass article has been removed from the strengthening lehr.

11. A method for strengthening a glass article, comprising:
forming the glass article from molten glass, the glass having an annealing point temperature;
applying potassium ions to the surface of the glass article before the glass article cools below the annealing point of the glass following the formation of the glass article, wherein the surface temperature of the glass article is at least the annealing point temperature of the glass during the applying step; and
maintaining the glass article at a temperature between the strain point temperature of the glass and about 150°C below the strain point temperature for at least about five minutes,
wherein the step of applying potassium ions to the surface of the glass article is accomplished by spraying potassium ions on the surface of the glass article.

12. An apparatus, comprising:
a staging area;
a glass article moving means;
a salt spraying means configured to spray glass articles, the apparatus being arranged such that the glass articles have a surface temperature above the annealing point of the glass when they are sprayed by the salt spraying means; and
a strengthening lehr, the strengthening lehr being configured to keep the glass article at a temperature between the strain point temperature of the glass and about 150°C below the strain point temperature for at least about five minutes.

13. A method for strengthening a glass article, comprising:
forming the glass article from molten glass, the glass having an annealing point temperature;
applying potassium ions to the surface of the glass article before the glass article cools below the annealing point of the glass following the formation of the glass article, wherein the surface temperature of the glass article is at least the annealing point temperature of the glass during the applying step; and
maintaining the glass article at a temperature between the strain point temperature of the glass and about 150°C below the strain point temperature for at least about five minutes.
